# FASCICULE DE BREVET EUROPEEN

(11) **EP 4 482 225 B1**
(45) Date de publication et mention de la délivrance du brevet: **12.11.2025**
(21) Numéro de dépôt: 24183473.8
(22) Date de dépôt: 20.06.2024
(51) Int. Cl.: H04W 52/02, H04W 84/12, H04W 40/00, H04W 48/00

(54) **PROCÉDÉ DE GESTION D'UN ÉTAT D'ACTIVATION D'UN ÉQUIPEMENT NOEUD D'UN RÉSEAU DE COMMUNICATION, DISPOSITIF, ÉQUIPEMENT NOEUD, SYSTÈME ET PROGRAMME D' ORDINATEUR CORRESPONDANTS**
VERFAHREN ZUR VERWALTUNG EINES AKTIVIERUNGSZUSTANDS EINER KNOTENVORRICHTUNG EINES KOMMUNIKATIONSNETZWERKS, ENTSPRECHENDE VORRICHTUNG, KNOTENVORRICHTUNG, SYSTEM UND COMPUTERPROGRAMM
METHOD FOR MANAGING AN ACTIVATION STATE OF A NODE DEVICE OF A COMMUNICATION NETWORK, CORRESPONDING DEVICE, NODE DEVICE, SYSTEM AND COMPUTER PROGRAM

(30) Priorité: 23.06.2023 FR 2306596
(43) Date de publication de la demande: 25.12.2024
(73) Titulaire: SAGEMCOM BROADBAND SAS, 92270 Bois-Colombes (FR)
(72) Inventeur: NGUYEN DINH HIEN, Michael Thien Bao, 92270 Bois-Colombes (FR)
(74) Mandataire: Novagraaf Technologies

(56) Documents cités:
- US-A1- 2014 269 476
- US-B1- 10 932 183

## Description

### Domaine technique

L'invention se rapporte au domaine technique des réseaux de communication sans fil, plus particulièrement lorsqu'ils sont soumis à des contraintes de consommation énergétiques.

L'invention concerne notamment un mécanisme de réactivation d'équipements nœuds d'un tel réseau de communication sans fil permettant une remise en route en chaîne desdits équipements nœuds.

### Etat de la technique antérieure

Aujourd'hui, un terminal utilisateur est souvent amené à accéder à un service de communication, par exemple Internet, en se connectant à un des équipement nœuds d'un réseau Wi-Fi maillé. Parmi ces s équipements nœuds de ce réseau maillé, un nœud, dit racine, permet l'accès à des utilisateurs d'accéder au service de communication. La mise en place d'un tel réseau maillé s'appuie sur la construction d'au moins deux types de réseau, à partir de chaque équipement nœud :
- Un réseau utilisateur. Ce réseau est celui qui est créé afin de permettre aux utilisateurs de se connecter et d'accéder aux services comme Internet. Seul le nœud racine a un accès direct aux services,
- Un réseau cœur. Ce réseau permet l'interconnexion des équipements nœuds formant eux-mêmes les éléments du réseau maillé. Cette interconnexion permet à chaque nœud du réseau maillé d'étendre le réseau de l'utilisateur en retransmettant les données depuis ou jusqu'au nœud racine. Ce réseau cœur permet aussi d'échanger des messages de contrôle afin de gérer la configuration des différents nœuds du réseau.

Un nœud du réseau maillé peut avoir plusieurs radios Wi-Fi, afin de pouvoir couvrir les différentes bandes de fréquence Wi-Fi autorisées. Généralement, le réseau de l'utilisateur est déployé sur toutes les radios Wi-Fi de chaque nœud, afin d'offrir la couverture la plus large possible. Le réseau cœur peut utiliser tout ou partie des radios disponibles afin permettre une interconnexion entre les différents nœuds du réseau maillé.

Pour qu'un utilisateur puisse connecter son appareil sur le réseau, le réseau utilisateur diffuse périodiquement une balise (de l'anglais, « beacon ») suivant la norme IEEE 802.11. La balise contient entre-autre le nom du réseau permettant de l'identifier. Cette information est ainsi visible de l'utilisateur via une interface graphique de son appareil, présentant tous les réseaux à portée avec leur nom. Une fois sélectionné, le terminal de l'utilisateur se connecte au réseau et accède à Internet. Les interconnexions pour le réseau cœur se mettent en place de la même manière, mais automatiquement entre les différents équipements nœuds, mais cette-fois ci avec le nom du réseau cœur. De plus, en suivant ce principe, les différents équipements nœuds présentent chacun un même et unique nom de réseau utilisateur de sorte que les terminaux utilisateurs peuvent utiliser ce nom pour se connecter à n'importe lequel des équipements nœuds du réseau maillé qui est à sa portée.

Pour répondre au besoin croissant de consommation de données, de plus en plus de bandes de fréquences sont utilisées dans le cadre de transmissions sans fil. Par exemple, dans le cadre de la technologie 'Wi-Fi' définie par le standard IEEE 802.11, les premiers produits sur le marché opéraient dans la bande 2.4 GHz (11b), puis 5 GHz (11a) sur des canaux de communication de 20 MHz de large. Les générations suivantes du 'Wi-Fi' ont consolidé l'exploitation de ces bandes en augmentant la taille des canaux de communication : 40 MHz avec la génération 4 (11n / Wi-Fi 4), 160 MHz avec la génération 5 (11ac / Wi-Fi 5). Le 'Wi-Fi' de génération 6 (11ax / Wi-Fi 6) a introduit en plus la bande de 6 GHz avec des canaux de communication de 160 MHz de large, tandis que la génération 7 (11be / Wi-Fi 7) étend à 320 MHz la largeur des canaux dans cette bande.

A chaque génération de produits Wi-Fi, de plus en plus de radios doivent être intégrées du côté d'un point d'accès au sein d'un même dispositif hébergeur (passerelle, routeur...). Outre les problèmes de coexistence de ces diverses radios entre elles, la consommation de l'ensemble du système devient un point critique. Par défaut, toutes les radios sont allumées, qu'il y ait ou non des équipements clients ou terminaux utilisateurs associés sur l'une d'entre elles.

Une approche classique pour réduire la consommation d'une radio est de la conserver allumée mais dans un mode dégradé (i.e., plusieurs chaînes de transmission/réception sont coupées) afin de pouvoir détecter les demandes de connexion des terminaux sur ladite radio. En cas de détection positive, l'équipement nœud hébergeur restaure la radio dans son mode de fonctionnement nominal. L'inconvénient de cette approche est qu'on réduit certes la consommation de la radio, mais on ne la coupe pas complètement. De plus, diminuer le nombre de chaines de réception peut entraîner une perte de sensibilité de la radio, c'est-à-dire sa capacité à détecter des terminaux éloignés.

Une autre approche consiste à conserver une radio - dite 'primaire' - allumée et une (ou plusieurs) radio(s) - dite(s) secondaire(s) - éteinte(s) dans une passerelle. Une radio secondaire éteinte ne sera rallumée qu'en cas de détection d'un terminal compatible avec cette radio secondaire, et qui s'associerait sur la radio primaire.

Afin de réduire la consommation en énergie des équipements nœuds d'un réseau de communication sans fil, il est connu d'éteindre les radios de chaque nœud du réseau maillé quand le réseau de l'utilisateur n'a pas été utilisé pendant une certaine période. Cette extinction est par exemple déclenchée en l'absence de connexion d'un terminal utilisateur connecté pendant une certaine période de temps. Cependant, une fois que toutes les radios sont complètement éteintes, il n'est plus possible de communiquer à travers le réseau cœur, car celui-ci repose sur ces mêmes radios Wi-Fi.

Le document US/2014/0269476 A1 décrit une solution de remise en route des radios d'un équipement nœud sur détection d'un terminal utilisateur déjà connu et autorisé à se connecter. Il s'agit en revanche d'une remise en route locale, au niveau d'un nœud donné, qui ne permet pas la réactivation des autres nœuds du réseau maillé.

En alternative, une remise en route centralisée peut être effectuée via un contrôleur général qui configure chacun des équipements nœuds du réseau maillé.

Cette dernière solution est bien adaptée à un environnement de réseau homogène, dont tous les nœuds soient compatibles et par exemple conformes à une même version d'un standard. En outre, les radios du réseau cœur doivent être maintenues allumées afin de maintenir le réseau cœur en état d'activité et de permettre la transmission des messages de contrôle de configuration.

Le document US10932183B1 décrit un système et une méthode de gestion de réseau maillé permettant aux points d'accès de ce réseau maillé de modifier dynamiquement leurs annonces de fonctionnalités en fonction de capacités d'appareils clients qui cherchent à se connecter, afin d'optimiser la connectivité et la compatibilité de ces appareils clients avec le réseau maillé.

La présente invention vient améliorer la situation.

### Résumé

L'invention est définie par les revendications annexées. Elle propose à cet effet un procédé de gestion d'un état d'activation d'un équipement nœud, dit nœud courant, d'un premier réseau de communication sans fil, ledit réseau de communication sans fil étant configuré pour fournir un service de communication à un équipement client, ledit réseau de communication sans fil comprenant au moins un autre équipement nœud, dit nœud voisin, ledit nœud courant comprenant une première radio hébergeant un premier point d'accès à un premier réseau de communication sans fil dudit nœud courant, dit réseau cœur, configuré pour interconnecter le nœud courant et ledit au moins un nœud voisin, et une deuxième radio hébergeant un deuxième point d'accès à un deuxième réseau de communication sans fil, dit réseau utilisateur, configuré pour connecter l'équipement client audit noeud courant et, par l'intermédiaire du réseau cœur, lui donner accès au service de communication. Ledit nœud courant est configuré pour, à l'expiration d'une période d'inactivité pendant laquelle aucun équipement client ne s'est connecté audit réseau utilisateur, passer dans un état partiellement désactivé, comprenant une désactivation partielle desdites radios, selon laquelle une desdites radios parmi la première et la deuxième radios reste active. Ledit procédé comprend :
- sur réception d'une requête de communication par le nœud courant sur une dite radio parmi la première et la deuxième radios, la réactivation de l'autre radio s, lorsque ledit nœud courant est dans un état partiellement désactivé, et
- lorsqu'il a été déterminé, au moins en fonction de la requête de communication reçue, qu'une reconnexion du nœud courant audit au moins un nœud voisin est requise pour traiter ladite requête de communication, et suite à un échec de reconnexion du nœud courant audit au moins un nœud voisin, le déclenchement d'une réactivation dudit au moins un nœud voisin par l'envoi par le nœud courant d'une requête de découverte sur au moins une radio dudit au moins nœud voisin.

L'équipement nœud courant fait partie d'un réseau de communication sans fil comprenant plusieurs nœuds et configuré pour rendre un service de communication, par exemple l'accès à un réseau distant. Par exemple, le service de communication est l'accès à Internet et un des nœuds du réseau de communication sans fil, dit nœud passerelle, dispose d'un accès direct à Internet. Le nœud courant gère aussi localement un autre réseau de communication sans fil, dit réseau utilisateur, auquel un équipement client, par exemple un terminal utilisateur, peut se connecter, notamment pour accéder au service de communication. Le réseau cœur permet donc d'étendre le réseau utilisateur du nœud courant et notamment, de connecter indirectement le terminal utilisateur au nœud passerelle qui dispose de l'accès à Internet.

On considère ici, en particulier, une situation de désactivation partielle des radios de l'équipement nœud courant pour répondre à des contraintes de réduction de consommation d'énergie.

L'invention propose de déclencher, suite à la réception d'une requête de communication, et lorsqu'au moins une radio du nœud courant est désactivée, non seulement la réactivation locale des radios du nœud courant, mais aussi la reconnexion du nœud courant à au moins de ses nœuds voisins. Selon l'invention, il déclenche cette reconnexion, uniquement lorsqu'elle est requise pour le traitement de la requête de communication. Lorsque le nœud courant ne parvient pas à se reconnecter au nœud voisin sélectionné, il déclenche une réactivation de ce nœud voisin en lui envoyant une requête de communication sur une de ses radios restée active.

Ainsi, avec l'invention, on gère au niveau du nœud courant, non seulement l'état d'activation de ses radios et donc l'accessibilité pour un terminal utilisateur au réseau utilisateur de ce nœud, mais aussi la connexion du nœud courant au réseau de communication sans fil par l'intermédiaire de son réseau cœur.

On comprend que, si le nœud voisin implémente lui-même le mécanisme de l'invention, grâce à l'envoi par le nœud courant d'une requête de découverte sur une radio restée active dudit nœud voisin, celui-ci va réactiver à son tour ses radios, se reconnecter au nœud courant et éventuellement déclencher sa propre reconnexion à d'autres nœuds voisins si c'est nécessaire pour traiter la requête de communication reçue du nœud courant. L'invention permet donc de propager une réactivation des radios des nœuds du réseau de proche en proche pour réaliser les reconnexions nécessaires.

L'invention s'applique à tout type de structure de réseau de communication, tel qu'un réseau maillé ou un réseau en étoile.

Selon un aspect, le procédé comprend la détermination qu'une reconnexion du nœud courant au réseau de communication sans fil est requise, au moins en fonction d'un type de la requête de communication et d'une topologie du réseau de communication sans fil.

La requête de communication comprend un identifiant de l'équipement client qui a émis cette requête et chaque nœud d'un réseau de communication sans fil connaît la topologie de ce réseau et notamment sa place par rapport à celles des autres nœuds. En fonction de la requête de communication reçue et de sa place dans le réseau du nœud courant notamment par rapport au nœud passerelle, il est décidé si une reconnexion du nœud courant au réseau de communication sans fil doit être mise en œuvre. La réactivation au niveau réseau cœur n'est donc déclenchée que lorsque nécessaire.

Selon un autre aspect, lorsqu'il a été déterminé qu'une reconnexion dudit nœud courant au réseau de communication sans fil par l'intermédiaire de son réseau cœur est requise, le procédé comprend la sélection d'au moins undit nœud voisin.

Selon le type de requête de communication reçue et la position du nœud courant dans la topologie du réseau de communication sans fil, il peut être nécessaire que le nœud courant se reconnecte à un de ses voisins, mais pas à un autre. Un avantage est de ne réactiver que les nœuds voisins qui doivent l'être.

Selon encore un autre aspect, lorsque la requête de communication comprend une requête de découverte d'undit réseau du nœud courant, ledit au moins un nœud voisin sélectionné est situé sur ledit chemin de connexion du nœud courant à un autre desdits équipements nœud du réseau cœur, dit nœud passerelle, configuré pour fournir le service de communication.

Lorsque le nœud courant n'est pas le nœud passerelle, il sélectionne uniquement le nœud voisin qui lui permet de se reconnecter indirectement au nœud passerelle.

Selon un autre aspect, lorsque la requête de communication comprend une requête de configuration du nœud courant, ladite sélection comprend la sélection de tous les autres nœuds voisins du nœud courant auxquels il n'est pas déjà connecté.

Par exemple, la requête de reconfiguration provient d'un nœud maître qui peut être le nœud passerelle ou un autre nœud. Selon un ou plusieurs exemples de réalisation, il est décidé que tous ses nœuds voisins doivent être réactivés pour que chacun d'entre eux soit en mesure de recevoir et traiter la requête de reconfiguration.

En variante, le nœud courant héberge un contrôleur qui a reçu une requête de configuration initiale et déclenche en réponse le mécanisme de l'invention pour la propager à tous les nœuds du réseau de communication sans fil.

Selon encore un autre aspect, la reconnexion comprend, suite à un échec de connexion audit au moins un nœud voisin sélectionné, la vérification d'un état d'activation de radios dudit au moins un nœud voisin sélectionné et, lorsqu'il a été constaté que la première radio du nœud voisin hébergeant le premier point d'accès au réseau cœur est désactivée, la requête de découverte envoyée comprend un identifiant du réseau utilisateur du nœud voisin.

Lorsque le nœud courant est déconnecté du réseau de communication sans fil et ne parvient pas à se reconnecter au nœud voisin sélectionné, un état d'activation des radios du nœud voisin est vérifié, en écoutant d'éventuels messages de diffusion de présence sur le réseau cœur. Lorsqu'aucun message de présence n'est détecté, parce que la première radio du nœud voisin est désactivée, le nœud courant a recours au point d'accès au réseau utilisateur de ce nœud voisin, dont la deuxième radio est restée active, et pour lequel il détecte un message de présence. Il envoie donc la requête de découverte au point d'accès au réseau utilisateur resté actif, en indiquant un identifiant du réseau utilisateur dans sa requête. De la sorte, l'équipement nœud accède au nœud voisin par l'intermédiaire de son réseau utilisateur, lorsque le réseau cœur n'est plus accessible. L'équipement nœud se comporte donc comme s'il était un terminal utilisateur pour déclencher la remise en route de son nœud voisin et donc se reconnecter au réseau de communication sans fil.

Selon un autre aspect, ledit procédé comprend, à l'expiration d'une période d'inactivité pendant laquelle aucun équipement client ne s'est connecté au réseau utilisateur du nœud courant, le passage dans un état désactivé, comprenant la désactivation partielle desdites radios du nœud courant, au moins une desdites radios parmi la première et la deuxième radios restant activée.

On entend par désactivation partielle des radios, l'extinction des radios à l'exception d'au moins une. Un avantage est de réduire la consommation en énergie par l'équipement de communication quand aucun autre équipement de communication n'est connecté à lui ou n'a demandé à se connecter à lui pendant une période temporelle donnée, par exemple égale à 5min, tout en maintenant la possibilité pour le nœud courant de continuer à diffuser une présence de son réseau utilisateur et pour un autre équipement de se reconnecter à l'équipement de communication.

En effet, il n'est pas envisageable d'éteindre complètement toutes les radios de cet équipement de communication, car il ne serait alors plus possible de communiquer avec lui, que ce soit via le réseau utilisateur ou le réseau de cœur. Un avantage de garder un point d'accès radio activé, est de maintenir cette possibilité pour un terminal utilisateur ou un nœud voisin de communiquer avec le nœud courant afin de pouvoir se reconnecter à lui au besoin. En conditionnant la mise en veille partielle à une absence de connexion avec des terminaux utilisateurs et des nœuds voisins, on garantit que le réseau cœur soit maintenu complètement opérationnel tant que c'est utile.

Selon encore un autre aspect, la radio qui reste activée est la deuxième radio.

De la sorte, le point d'accès au réseau utilisateur reste activé, l'équipement nœud peut continuer à diffuser sa présence et le terminal utilisateur pourra se reconnecter au réseau utilisateur de l'équipement nœud.

L'invention concerne également un dispositif de gestion d'un état d'activation d'un équipement nœud, dit nœud courant, d'un premier réseau de communication sans fil, configuré pour fournir un service de communication à un équipement client, ledit réseau de communication sans fil comprenant au moins un autre équipement nœud, dit nœud voisin, , ledit nœud courant comprenant une première radio hébergeant un premier point d'accès à un premier réseau de communication sans fil dudit nœud courant, dit réseau cœur, configuré pour interconnecter le nœud courant et ledit au moins un nœud voisin et une deuxième radio hébergeant un deuxième point d'accès à un deuxième réseau de communication sans fil, dit réseau utilisateur, configuré connecter l'équipement client audit nœud courant et, par l'intermédiaire du réseau cœur, lui donner accès au service de communication. ledit nœud courant est configuré pour, à l'expiration d'une période d'inactivité pendant laquelle aucun équipement client ne s'est connecté audit réseau utilisateur, passer dans un état partiellement désactivé, comprenant une désactivation partielle desdites radios, selon laquelle une desdites radios parmi la première et la deuxième radios reste active. Ledit dispositif est configuré pour mettre en œuvre :
- sur réception d'une requête de communication par le nœud courant sur une dite radio parmi la première et la deuxième radios, la réactivation de l'autre radio du oeud courants, lorsque ledit nœud courant est dans un état partiellement désactivé, et lorsqu'il a été déterminé, au moins en fonction de la requête de communication reçue, qu'une reconnexion du nœud courant audit au moins un nœud voisin est requise pour traiter ladite requête de communication, et suite à un échec de connexion du nœud courant audit au moins un nœud voisin, le déclenchement d'une réactivation du au moins un nœud voisin par l'envoi par le nœud courant d'une requête de découverte sur au moins une radio dudit au moins nœud voisin.

Avantageusement, un tel dispositif met en œuvre le procédé précité de gestion d'un état d'activation d'un équipement nœud, dans ses différents modes de réalisation.

Selon un exemple de réalisation non limitatif, le dispositif précité est intégré dans un équipement nœud, dit nœud courant, d'un premier réseau de communication sans fil, configuré pour fournir un service de communication à un équipement client, ledit réseau de communication sans fil comprenant au moins un autre équipement nœud, dit nœud voisin, ledit nœud courant comprenant une première radio hébergeant au moins un premier point d'accès à un premier réseau de communication sans fil dudit nœud courant, dit réseau cœur, configuré pour interconnecter le nœud courant et ledit au moins un nœud voisin, et une deuxième radio hébergeant au moins un deuxième point d'accès à un deuxième réseau de communication sans fil, dit réseau utilisateur, configuré pour connecter le équipement client au nœud courant et, par l'intermédiaire du réseau cœur, lui donner accès au service de communication.

Selon un autre exemple de réalisation non limitatif, l'équipement nœud précité est intégré dans un système de communication comprenant au moins deux équipements nœuds précités, d'un premier réseau de communication sans fil, configuré pour fournir un service de communication à un équipement client, ledit système comprenant un équipement client apte à se connecter à au moins un desdits équipements nœuds pour accéder audit service de communication.

Le système, l'équipement nœud et le dispositif présentent les mêmes avantages que le procédé de gestion précité.

L'invention concerne aussi un produit programme d'ordinateur comportant des instructions pour l'exécution du procédé de gestion précité.

L'invention concerne enfin un support d'enregistrement lisible par un ordinateur sur lequel sont enregistrés les programmes d'ordinateurs précités.

.

### Brève description des dessins

D'autres caractéristiques et avantages apparaitront au cours de la lecture de la description détaillée qui va suivre pour la compréhension de laquelle on se reportera aux dessins annexés parmi lesquels :
[Fig.1] illustre de façon schématique un dispositif de gestion d'un état d'activation d'un équipement nœud d'un réseau de communication sans fil, dans son environnement, selon un exemple de réalisation particulier non limitatif;
[Fig. 2] présente sous forme de logigramme les étapes d'un procédé de gestion d'un état d'activation d'un équipement nœud d'un réseau de communication sans fil selon un exemple de réalisation particulier non limitatif;
[Fig.3] détaille une étape de reconnexion à un nœud voisin de l'équipement nœud selon un exemple de réalisation particulier non limitatif du procédé de gestion d'un état d'activation d'un équipement nœud;
[Fig.4] illustre de façon schématique un exemple de désactivation de proche en proche des équipements nœuds d'un réseau de communication sans fil selon un mode de réalisation;
[Fig.5] illustre de façon schématique un exemple de mise en œuvre d'une réactivation de proche en proche d'un réseau de communication sans fil lorsqu'un équipement client demande à se connecter à un de ses équipements nœuds, selon un exemple de réalisation particulier non limitatif;
[Fig. 6] illustre de façon schématique un exemple de mise en œuvre d'une réactivation de proche en proche d'un réseau de communication sans fil lorsqu'un équipement client demande à se connecter à un de ses équipements nœuds, selon un autre selon un exemple de réalisation particulier non limitatif;
[Fig. 7] illustre de façon schématique un exemple de mise en œuvre d'une réactivation de proche en proche d'un réseau de communication sans fil en vue d'appliquer une reconfiguration du réseau de communication sans fil, selon encore un autre mode de réalisation; et
[Fig. 8] illustre de façon schématique un exemple de structure matérielle d'un dispositif de gestion d'un état d'activation d'un équipement nœud d'un réseau de communication sans fil selon un exemple de réalisation particulier non limitatif.

### Description des modes de réalisation

Dans la description qui va suivre, des éléments identiques, similaires ou analogues seront désignés par les mêmes chiffres de référence. Sauf indication contraire, les diagrammes ne sont pas nécessairement à l'échelle.

Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en œuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en œuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en œuvre tout ou partie des fonctionnalités des blocs et/ou des phases des procédés ou méthodes selon les exemples de réalisation. Le code logiciel peut être stocké dans une mémoire ou un support lisible accessible directement ou à travers un autre module par le processeur ou contrôleur.

Les exemples de réalisation qui vont maintenant être décrits, se placent, de façon non limitative, dans le contexte de réseaux conformes la famille des standards 802.11 de l'Institute of Electrical and Electronics Engineers « IEEE », ou réseaux dits de type 'Wi-Fi'. Ils concernent aussi bien un réseau sans fil domestique qu'un réseau d'entreprise.

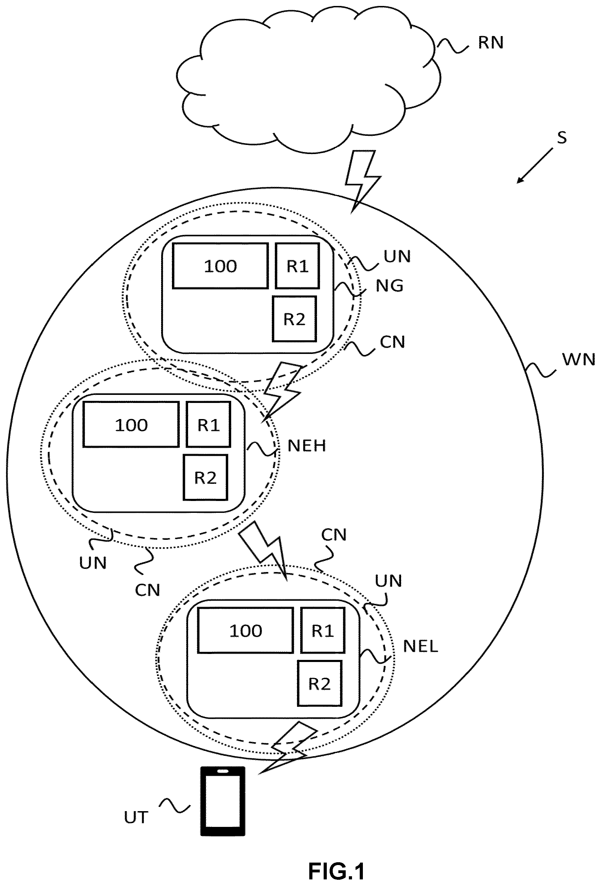

En relation avec la FIG. 1, on présente un système S de gestion d'un état d'activation d'un réseau de communication sans fil WN selon un ou plusieurs exemples particuliers non limitatifs de réalisation. Dans cet exemple, le réseau WN est un réseau maillé comprenant trois équipements nœuds NG, NEH et NEL. Chacun des nœuds NG, NEH et NEL est équipé d'au moins une première radio R1 hébergeant au moins un premier point d'accès à un premier réseau sans fil dit réseau cœur CN (ou parfois aussi désigné sous l'appellation réseau d'acheminement ou d'amené ou « backhaul » en anglais) destiné à permettre l'interconnexion des équipements nœuds du réseau WN et une deuxième radio R2 hébergeant au moins un deuxième point d'accès à un deuxième réseau sans fil, dit réseau utilisateur UN (ou parfois aussi désigné sous l'appellation réseau frontal ou « fronthaul » en anglais), destiné à connecter des équipements clients, par exemple des terminaux utilisateurs, tel que le terminal utilisateur UT. Il s'agit ici d'un terminal mobile de type téléphone intelligent (de l'anglais, « smartphone »), mais on désigne n'importe quel terminal utilisateur équipé de moyens de communication sans fil adaptés, par exemple un ordinateur portable, une tablette, un objet connecté, etc. On note que généralement le réseau de l'utilisateur UN est déployé sur chacune des radios Wi-Fi de l'équipement nœud afin d'offrir aux terminaux utilisateurs la couverture la plus large possible. On note aussi que le réseau cœur CN permet aussi aux équipements nœuds d'échanger des messages de contrôle, notamment en vue de gérer leur configuration. Par exemple, le réseau WN est conforme au standard IEEE802.11 Easy Mesh qui définit l'usage du protocole de communication IEEE1905 entre différents points d'accès sans fil, par exemple hébergés par des équipements de communication produits par des fabricants différents et formant les nœuds d'un réseau maillé en Wi-Fi ou en Ethernet (ou une combinaison des deux). Autrement dit, un équipement de communication certifié EasyMesh est capable de communiquer avec n'importe quel autre équipement de communication lui aussi certifié EasyMesh en utilisant un ensemble de messages définis dans le protocole IEEE1905.

Selon ce standard, un contrôleur est configuré pour gérer la configuration des équipements nœuds du réseau en envoyant des messages de contrôle à des agents qui exécutent les ordres du contrôleur. Le contrôleur et ses agents peuvent être hébergés dans les nœuds du réseau WN.

On comprend que le réseau cœur CN permet à chaque équipement nœud du réseau maillé d'étendre son réseau utilisateur UN en retransmettant les données émises par un terminal utilisateur qui s'est connecté à son réseau utilisateur vers un autre nœud du réseau de communication sans fil WN. En particulier, on suppose ici que le réseau de communication sans fil WN est configuré pour rendre un ou plusieurs services de communication au terminal utilisateur UT. Par exemple, le service de communication en question est un accès à un réseau distant RN, tel qu'Internet. Dans un autre exemple, le service de communication est un service d'accès à une unité de stockage de données attachée au réseau WN (« Network Attached Storage », en anglais). Il peut s'agir aussi d'un service d'authentification attaché au réseau WN. Encore dans un autre exemple, le service de communication est un service permettant d'accéder à une unité d'impression associée au réseau WN. Encore dans un autre exemple le service de communication est un service permettant d'accéder à des ressources dédiées comme des ressources de calculs distribués qui peuvent être disponibles dans le réseau WN ou dans un réseau distant. Encore dans un autre exemple, le service de communication est un service permettant au terminal utilisateur d'interagir avec un autre terminal associé au réseau WN. Plus généralement on associera la désignation de service de communication à différents types de services accessibles et/ou associés au réseau WN.

On note que les réseaux utilisateur et cœur de chaque nœud du réseau WN peuvent respectivement utiliser des identifiants de réseau, par exemple de type SSID (de l'anglais, « Service Set Identifier »), qui sont distincts ou identiques. Dans la suite, on suppose, par simplicité, que tous les réseaux utilisateur UN utilisent le même identifiant réseau SSID-UN et tous les réseaux cœur CN utilisent le même identifiant réseau SSID-CN. On note également qu'un nœud du réseau WN peut gérer à son niveau d'autres réseaux locaux que le réseau utilisateur UN. Dans la suite, on pourra par simplicité utiliser aussi le terme « réseau cœur » pour désigner le réseau de communication sans fil WN et le fait que les nœuds de ce réseau de communication sans fil WN se connectent et communiquent entre eux par l'intermédiaire de leurs réseaux cœur respectifs.

Dans le réseau WN, on considère en particulier l'équipement nœud NG, dit nœud racine ou nœud passerelle, qui est le nœud du réseau WN configuré pour rendre le ou les services de communication proposés par le réseau WN. De façon non limitative, l'exemple de la FIG. 1 est celui d'un nœud passerelle NG qui dispose d'un accès au réseau distant RN et le service de communication comprend notamment un accès à Internet. Dans l'exemple de la FIG. 1, il s'agit d'une passerelle domestique (« home gateway », en anglais) ou une passerelle d'entreprise.

Néanmoins, on désignera plus largement dans la suite par « nœud passerelle » le nœud du réseau de communication sans fil WN qui rend le ou les services de communication proposés aux terminaux utilisateur par le réseau WN, qu'ils soient hébergés dans le réseau local WN ou dans le réseau distant RN.

On comprend que dans un tel réseau de communication WN, grâce au réseau cœur CN, le terminal utilisateur UT peut se connecter à n'importe quel des équipements nœuds NEL, NEH et NG pour accéder au(x) services de communication. Les deux autres nœuds sont des nœuds d'extension du réseau maillé, le nœud NEH, ou nœud d'extension haut, est un nœud intermédiaire apte à s'interconnecter à la fois avec le nœud racine NG et le nœud NEL, ou nœud d'extension bas, qui n'est apte à se connecter qu'à son unique voisin NEH.

On suppose que, selon des modes de réalisation, un équipement nœud est apte à désactiver au moins une partie de ses radios lorsqu'il a été vérifié qu'aucun équipement client, terminal utilisateur ou nœud voisin, ne s'est connecté à lui pendant une période temporelle donnée, afin d'économiser sa consommation en énergie. Des modes de réalisation se situent dans ce contexte particulier d'un état de désactivation partielle des radios d'un équipement nœud du réseau de communication WN.

Dans l'exemple de la FIG. 1, chacun des équipements nœuds du réseau de communication sans fil WN, comprend un dispositif 100 de gestion d'un état d'activation d'un équipement nœud selon un mode de réalisation. Un tel dispositif est configuré pour, mettre en œuvre :
- sur détection d'un événement de communication, lorsqu'une des radios de l'équipement nœud parmi la première et la deuxième était dans un état désactivé, la réactivation de cette radio, et
- lorsqu'il a été déterminé, au moins en fonction de la requête de communication reçue, qu'une reconnexion du nœud courant au réseau cœur est requise pour traiter ladite requête de communication, et suite à un échec de connexion du nœud courant audit au moins un nœud voisin, l'envoi par le nœud courant d'une requête de découverte sur une radio restée active dudit au moins nœud voisin.

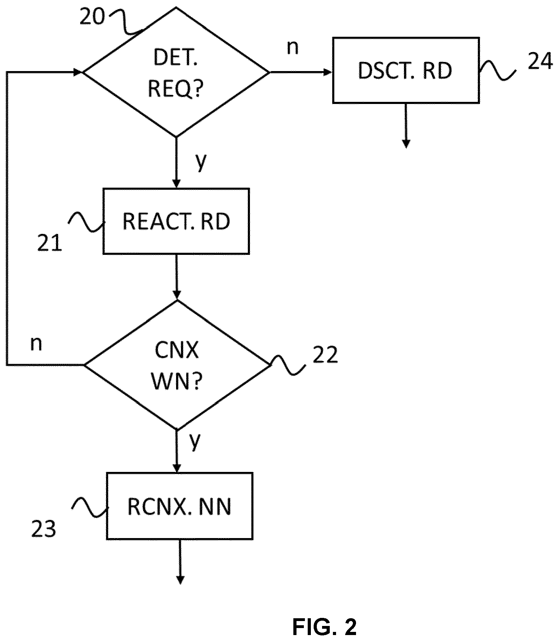

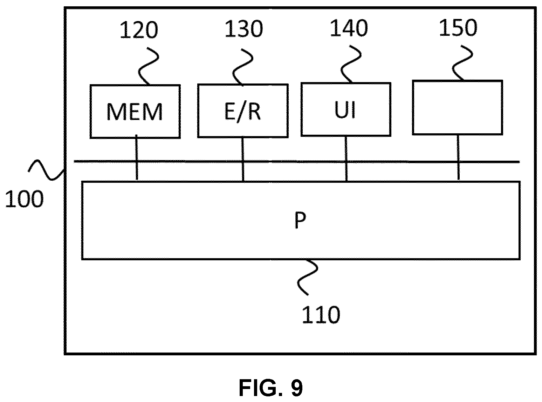

Le dispositif 100 met ainsi en œuvre un procédé de gestion d'un état d'activation d'un équipement nœud d'un réseau de communication sans fil, qui va être présenté ci-après en relation avec la FIG. 2. Le dispositif 100 peut être mis en œuvre de diverses manières. Un exemple de structure matérielle du dispositif 100 sera décrit ci-après en relation avec la FIG. 9.

On présente désormais en relation avec la FIG. 2, un procédé de gestion d'un état d'activation d'un équipement nœud d'un réseau de communication sans fil selon un ou plusieurs modes de réalisation. On considère ici un équipement nœud, dit nœud courant, qui peut être n'importe quel équipement nœud d'un réseau de communication sans fil comprenant plusieurs nœuds, par exemple l'un quelconque des équipements nœuds NG, NEH, NEL de l'exemple de la FIG. 1.

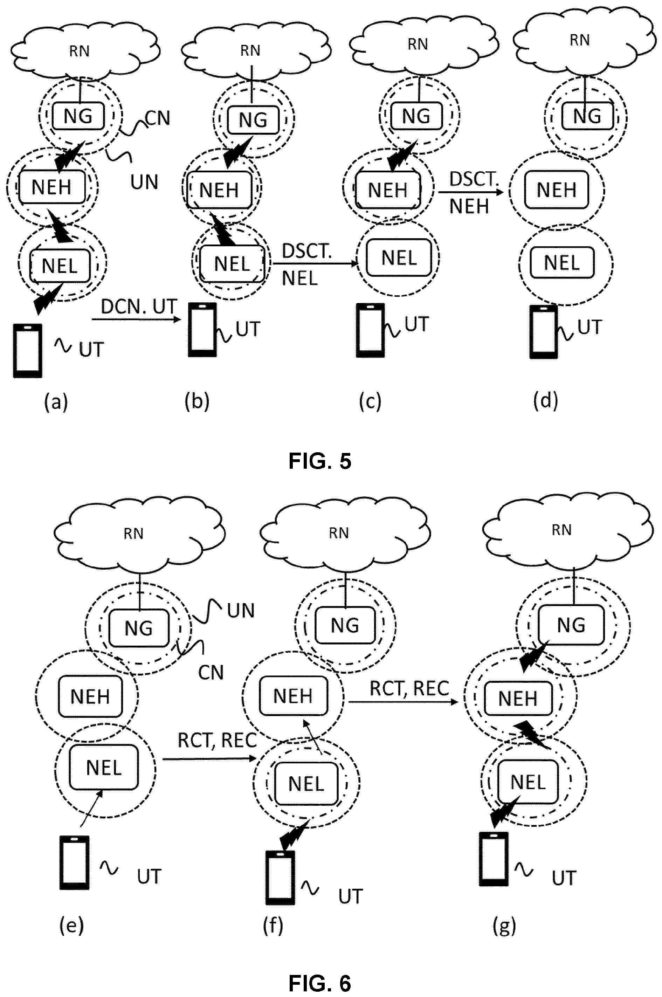

On suppose ici que les radios du nœud courant sont partiellement désactivées. Par exemple, seule la deuxième radio est active, ce qui fait que seul le réseau utilisateur UN du nœud courant est accessible. On comprend que le nœud courant est par conséquent déconnecté du réseau cœur CN. Pour les autres nœuds du réseau de communication sans fil WN, on suppose qu'ils sont soit partiellement désactivés, selon la même hypothèse, soit dans un état activé. Un exemple de désactivation partielle du réseau de communication sans fil sera détaillé plus avant en relation avec la FIG. 5.

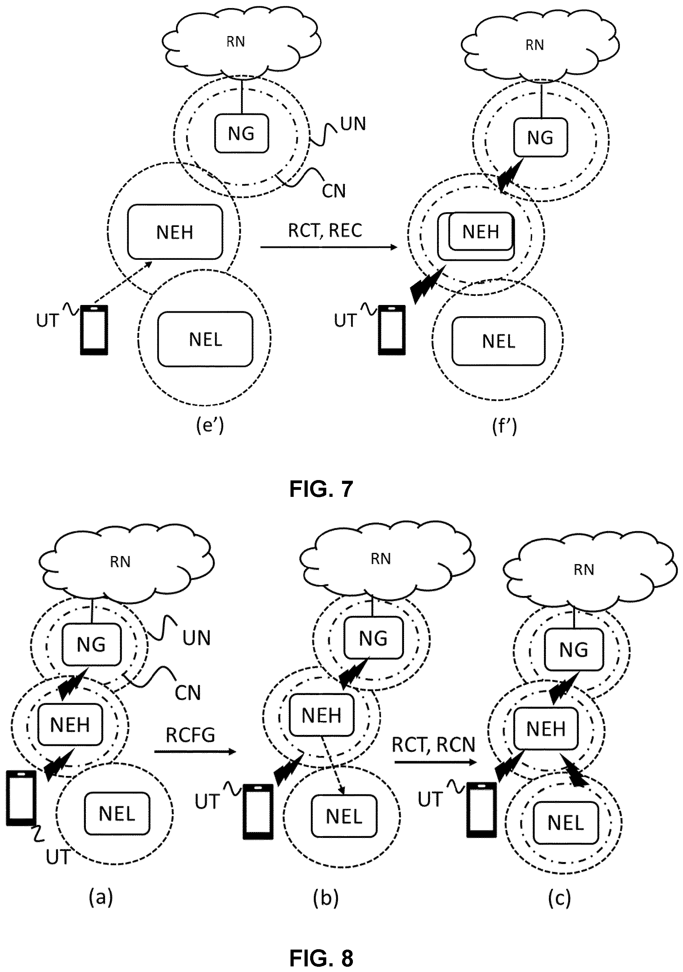

On note également que le procédé qui va maintenant être décrit s'applique aussi à un nœud en mode actif, dont toutes les radios fonctionnent de façon nominale. Un exemple sera détaillé en relation avec la FIG. 8.

En 20, une requête de communication est reçue par le nœud courant. Il s'agit par exemple d'une requête de découverte du réseau utilisateur UT reçue en provenance du terminal utilisateur UT sur la deuxième radio du nœud courant restée au moins partiellement active. Cette requête est par exemple conforme à un protocole de communication standardisé utilisé, tel que le protocole IEEE802.11, et comprend un message de type « Probe Request ». Généralement, un terminal utilisateur envoie ce type de message en vue de se connecter au réseau de communication sans fil WN puis d'accéder au service de communication. On note que cette requête de découverte peut aussi provenir d'un autre nœud du réseau de communication sans fil, voisin du nœud courant.

Selon un autre exemple de réalisation non limitatif, il s'agit d'une requête de contrôle en provenance d'un autre équipement nœud du réseau WN. Par exemple, elle comprend une requête de mise à jour ou de reconfiguration du réseau de communication sans fil. Elle est généralement émise à l'origine par le nœud passerelle de la FIG. 1 en réponse à un ordre de configuration qui peut trouver son origine en dehors du réseau WN. Par exemple, il a été reçu d'un équipement distant via sa connexion directe au réseau distant RN. En variante, elle peut aussi provenir d'un contrôleur situé n'importe où dans le réseau WN, par exemple sur un autre nœud du réseau WN que le nœud passerelle. Selon la norme IEEE802.11 EasyMesh par exemple, un tel contrôleur est configuré pour exécuter un programme gestionnaire du réseau WN et transmettre des ordres à des agents qui les exécutent. En théorie, la topologie du réseau WN n'est pas liée à celle des liens entre le contrôleur et ses agents. Néanmoins, en pratique, le contrôleur est généralement implémenté sur le nœud passerelle et les agents sur d'autres nœuds du réseau WN.

Par exemple, cette requête de mise à jour est conforme au protocole IEEE802.11 Easy Mesh. On note que pour recevoir cette requête de contrôle, le nœud courant doit être dans un état selon lequel sa première radio est activée. Ce cas sera détaillé en relation avec la FIG. 8.

En 21, il est commandé au nœud courant de réactiver sa radio qui était dans un état désactivé. Dans cet exemple il s'agit de la première radio. Il s'agit donc d'une réactivation au niveau local.

En 22, il est vérifié si au moins une condition donnée de reconnexion du nœud courant au réseau de cœur CN est satisfaite.

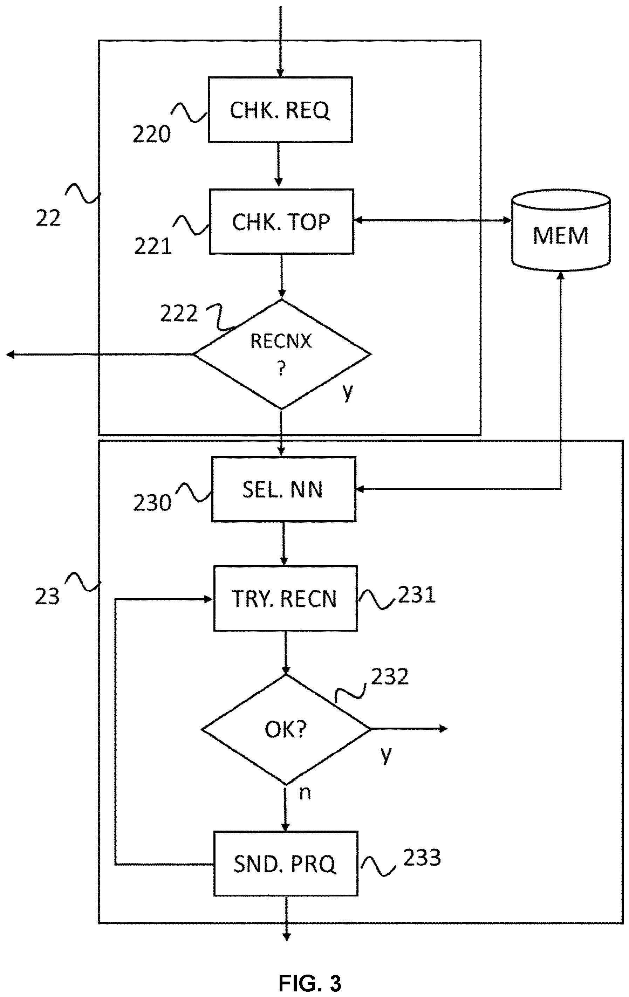

On suppose ici que c'est bien le cas. En 23, il est commandé au nœud courant de se reconnecter à au moins un de ses nœuds voisins. Les étapes 22 et 23 seront détaillées ci-après en relation avec la FIG.3.

Si au contraire, la condition de reconnexion du nœud courant au réseau de cœur CN n'est pas satisfaite, parce que le nœud courant est en mesure de traiter la requête de communication reçue, on retourne à l'étape 20 et on se place dans l'attente d'une nouvelle requête de communication.

On détaille maintenant en relation avec la FIG. 3 l'étape de vérification 22 qu'au moins une condition de reconnexion au réseau de cœur CN est satisfaite selon un exemple de réalisation non limitatif. En 230, on obtient un type de la requête de communication reçu et un identifiant de l'équipement de communication source de la requête. Il s'agit par exemple de déterminer si la requête reçue est une requête de découverte du réseau utilisateur UN du nœud courant. En 231, on obtient une topologie du réseau de cœur et plus précisément une place du nœud courant dans le réseau de cœur. On suppose que le nœud courant est capable d'obtenir des informations relatives à cette topologie, par exemple auprès d'une mémoire MEM accessible au dispositif 100, qui peut être intégrée ou non dans ce dispositif. Il peut les obtenir aussi via des messages, dits balises, transmis par ses nœuds voisins. Il sait par exemple si un nœud voisin le relie au nœud passerelle ou non.

On détermine ensuite en 222, à l'aide des informations obtenues, s'il y a lieu de reconnecter le nœud courant au réseau cœur ou non. Par exemple, si la requête de communication reçue est une requête de découverte du réseau utilisateur du nœud courant et si le nœud courant est le nœud passerelle, il est décidé qu'aucune reconnexion au réseau cœur n'est requise. En effet, vu que c'est lui qui rend le service de communication (par exemple, il a un accès direct à Internet), il suffit qu'il reconnecte le terminal utilisateur à son réseau utilisateur. La réactivation de ses radios au niveau local est donc suffisante pour qu'il puisse traiter la requête de communication. Dans ce cas, on retourne à l'étape 20.

Selon un autre exemple, il est déterminé que le nœud courant n'est pas le nœud passerelle NG et la requête de communication reçue est une requête de découverte du réseau utilisateur. Dans tous les cas, quelle que soit la provenance de la requête de découverte reçue, il est décidé qu'une reconnexion du nœud courant au réseau cœur est nécessaire.

L'étape 23 de reconnexion est donc mise en œuvre. En 230, on sélectionne au moins un nœud voisin auquel le nœud courant doit se reconnecter. Plusieurs logiques de sélection peuvent être mises en œuvre.

Selon un ou plusieurs exemples de réalisation, le nœud courant doit rétablir sa connexion au réseau cœur en direction du nœud passerelle. Il sélectionne donc un nœud voisin qui est situé sur le chemin de connexion vers le nœud racine. Selon la topologie du réseau de cœur, il peut y en avoir plusieurs. Dans l'exemple de la FIG. 1, il y en a au plus un. Par exemple, si le nœud courant est le nœud d'extension bas NEH, le nœud voisin sélectionné est le nœud d'extension haut NEH.

Dans le cas où il y a plusieurs nœuds voisins, on peut décider d'en choisir un seul ou de les sélectionner tous. Par exemple, le nœud voisin sélectionné est celui auquel il était précédemment connecté. Par exemple, cette information est obtenue de la mémoire MEM.

En 231, il est commandé au nœud de tenter de se reconnecter au nœud voisin sélectionné. Pour ce faire, le nœud courant écoute les radios du nœud voisin sélectionné pour déterminer si la radio hébergeant le point d'accès au réseau de cœur est restée active. Si c'est le cas, il envoie une requête de découverte pour se connecter directement au réseau de cœur du nœud voisin. En cas de succès constaté en 232, il se reconnecte au nœud voisin et traite la requête de communication. En cas d'échec, il envoie une requête de découverte PRQ sur la deuxième radio restée active du nœud voisin. Il s'agit de celle qui héberge le point d'accès au réseau utilisateur UN du nœud voisin. Il se comporte donc comme un équipement client de type terminal utilisateur pour tenter de joindre son nœud voisin.

On comprend que la réception par le nœud voisin en question de cette requête de découverte PRQ, pourvu qu'il implémente le procédé de gestion d'un état d'activation d'un équipement nœud selon l'invention qui vient d'être décrit, va déclencher le même mécanisme à réception de la requête de découverte émise par le nœud courant, ce qui va permettre de propager de proche en proche la reconnexion entre eux des nœuds du réseau de cœur CN. Des exemples de propagation de proche en proche seront détaillés ci-après en relation avec les FIGS. 6 à 8.

De retour à l'étape 230, on considère maintenant un autre exemple, selon lequel le nœud courant est le nœud d'extension haut NEH du nœud. Selon des modes de réalisation, **il** est décidé qu'une reconnexion au réseau cœur est requise et le nœud voisin sélectionné est le nœud passerelle NG. Le nœud d'extension bas NEL n'est pas sollicité puisqu'il ne donne pas l'accès au service de communication. Un exemple de ce type sera détaillé ci-après en relation avec les FIGS. 6 et 7.

De retour à l'étape 20, lorsqu'aucune requête de communication n'est reçue par le nœud courant pendant une période temporelle donnée, par exemple égale à 5min et qu'il a été vérifié qu'il n'est connecté à aucun équipement client, terminal utilisateur ou nœud voisin, il est commandé au nœud courant en 24 de procéder à une désactivation partielle de ses radios.

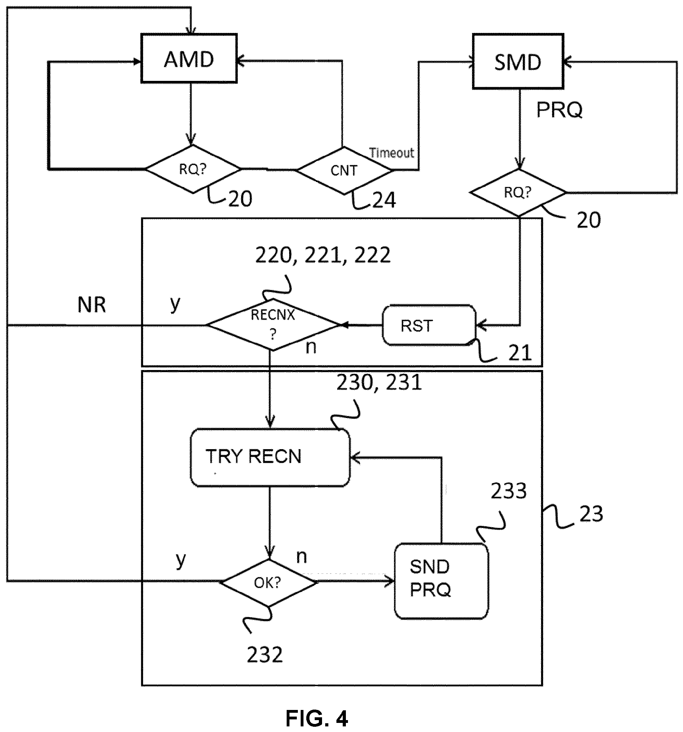

En relation avec la FIG. 4, on décrit maintenant un exemple d'algorithme permettant de faire passer le nœud courant d'un mode actif à un mode veille en implémentant le procédé de gestion d'un état d'activation d'un nœud d'un réseau de communication sans fil selon des modes de réalisation. Par exemple, cet algorithme est mis en œuvre par le dispositif 100. Par souci de clarté, les étapes/sous-étapes du procédé de gestion sont désignées par les mêmes références que celles utilisées précédemment en relation avec les FIGS 2 et 3.

On considère comme état de départ d'un nœud courant le mode actif AMD. On désigne par mode actif, un état du nœud courant dans lequel toutes ses radios sont actives et donc opérationnelles.

Dans ce mode actif, il est vérifié en 20 si des équipements de communication sont connectés au nœud courant afin de savoir si le nœud courant peut se mettre en veille. Si des connexions sont en cours, rien ne se passe. Si aucun équipement de communication n'est connecté ou est en cours d'établissement d'une connexion avec le nœud courant, un compteur ou retardateur est mis en route. Si une nouvelle demande de connexion survient avant l'expiration d'un délai d'inactivité radio donné, le retardateur est désactivé. Sinon, une fois le délai expiré en 24, le mode veille SMD est enclenché. Le délai d'inactivité radio représente une période d'inactivité radio du nœud courant. Par exemple, il est fixé à 5min, ce qui constitue un compromis acceptable permettant d'éviter des désactivations intempestives et trop fréquentes du fait de simples perturbations tout en contribuant à une réduction significative de la consommation énergétique du nœud courant. Ces perturbations peuvent être causées par un signal électromagnétique généré par un appareil électrique perturbant la communication radio. Par exemple, un four micro-onde peut perturber une radio Wi-Fi sur la bande de fréquence 2.4GHz. Elles peuvent aussi être dues à l'apparition d'un obstacle entre le nœud courant et un équipement client, par exemple le corps d'une personne qui passe physiquement entre les deux équipements de communication, ou encore un mur, suite à un déplacement d'un terminal utilisateur. On comprend que ces perturbations peuvent être à l'origine de déconnexions temporaires, qui ne doivent pas pour autant déclencher une mise en veille du nœud courant.

Une valeur trop courte du délai d'inactivité radio pourrait empêcher des appareils de se connecter, ou de se déclencher trop souvent pour de simples perturbations. Il peut par exemple être configuré pour durer 5 minutes. À la suite de ces 5 minutes, si aucun équipement client ne s'est connecté au nœud courant, il est possible de considérer que le nœud courant est inactif, auquel cas le passage « en veille » est acceptable. Dans d'autres exemples, selon l'environnement considéré, en lien notamment avec un nombre de terminaux ou stations connectés usuellement, ce délai d'inactivité radio peut être configuré pour durer de l'ordre de la minute (lorsque qu'un faible nombre de stations sont susceptibles de vouloir se connecter) ou pour durer plus de 5 min (lorsqu'un plus grand nombre de stations sont susceptibles de vouloir se connecter).

Selon des modes de réalisation, ce mode veille correspond à un état de désactivation partielle des radios du nœud courant.

Selon des modes de réalisation, on désigne par mode veille un état de désactivation partielle des radios du nœud courant. Par exemple, au moins un point d'accès Wi-Fi est maintenu opérationnel, par exemple un seul. De la sorte, le nœud courant reste accessible à un équipement de communication qui souhaite se connecter à lui. Par exemple, le point d'accès maintenu opérationnel peut être choisi sur la base de différents critères. Par exemple, il est celui qui couvre le plus d'équipements de communication ou bien celui qui a été utilisé en dernier avant la mise en veille ou encore celui a été préalablement choisi comme tel par un utilisateur.

La mise en veille ou désactivation partielle des radios du nœud courant peut comprendre en outre le passage de la radio laissée active dans un mode de fonctionnement dégradé. Par exemple, on réduit un nombre d'antennes actives et/ou la puissance d'émission d'une antenne donnée, ou encore on éteint des chemins d'accélération de trafic, etc. La radio elle-même peut fonctionner en un état dégradé (e.g. réduction du nombre d'antennes actives, réduction de la puissance d'émission, extinction des chemins d'accélération de trafic, etc.).On comprend que cette mise en veille partielle vise à atteindre un double objectif, celui de réduire la consommation énergétique du nœud courant lorsqu'il est en situation d'inactivité toute en maintenant la possibilité de continuer à diffuser la présence d'au moins un réseau du nœud courant et de détecter toute requête de connexion d'un terminal utilisateur à ce réseau.

En référence à un équipement nœud de la FIG. 1 comprenant deux radios, on comprend aussi que cette mise en veille partielle va conduire à éteindre l'une des deux radios. Selon un exemple de réalisation de l'invention, la première radio R1 hébergeant le point d'accès au réseau de cœur est éteinte et la deuxième radio R2 hébergeant le point d'accès au réseau utilisateur est maintenue active, au moins dans un mode dégradé, de sorte qu'un terminal utilisateur puisse continuer à accéder au réseau utilisateur. On note qu'une partie (par exemple une branche) du réseau de cœur est coupée, ce qui reste une situation acceptable dans la mesure où elle n'est plus en usage.

Dans un exemple, on suppose dans la suite de ce document que la deuxième radio est la seule restée active. Une fois qu'il est installé dans le mode veille SMD, le nœud courant continue de diffuser la présence du réseau utilisateur UN, en émettant périodiquement sur sa radio restée active un signal balise comprenant un identifiant du réseau correspondant, de façon connue en soi. Par exemple, l'identifiant du réseau comprend un SSID (de l'anglais, « Service Set Identifier »). Il continue en 20 à écouter cette radio en vue de détecter tout événement de connexion.

Si, suite à la réception de ce signal balise, un équipement de communication, par exemple un terminal utilisateur, souhaite se connecter au réseau du nœud courant identifié par le SSID, il envoie une requête de découverte, par exemple de type requête de sonde (de l'anglais, « Probe request »), comprenant cet SSID. Elle est reçue en 20 par le nœud courant. Il est alors vérifié qu'elle comprend l'identifiant de son réseau (ici son réseau utilisateur UN). Si l'identifiant du réseau indiqué ne correspond pas à celui de son point d'accès resté actif, rien ne se passe, la requête est ignorée. L'identifiant de réseau SSID sert donc de filtre. S'il y a correspondance, il est décidé qu'un équipement de communication souhaite se connecter, ce qui déclenche en 21 la réactivation locale des radios du nœud courant. Par exemple, une telle réactivation comprend la réactivation de la première radio et le passage du mode dégradé à un mode complètement actif de la deuxième radio. Autrement dit, les antennes précédemment éteintes sont rallumées, la puissance d'émission est repassée à un niveau de fonctionnement nominal et les chemins d'accélération de trafic sont rétablis.

Cette remise en route est faite localement, c'est-à-dire que la procédure de remise en route des points d'accès du nœud courant, de sa propre connexion au reste du réseau de cœur, ainsi que d'éventuels autres réseaux utilisateurs qu'il gère localement, est déclenchée localement au niveau du nœud courant dans des modes de réalisation.

La reconnexion au réseau de cœur s'effectue ensuite si nécessaire, lorsqu'au moins une condition de reconnexion est satisfaite. Comme précédemment décrit, la vérification de cette condition est effectuée en 22. Selon un mode de réalisation, elle prend en compte un type de la requête de communication reçue (requête de découverte ou requête de configuration par exemple) obtenu en 220 et s'appuie sur une connaissance de la topologie du réseau, obtenue en 221, par exemple d'une mémoire MEM accessible au dispositif 100 et notamment de la place du nœud courant dans le réseau WN. S'il est décidé en 222 que le nœud doit se reconnecter au réseau cœur CN, l'étape 23 est déclenchée. Au moins un nœud voisin est sélectionné en 230, le nœud courant tente de se connecter à son réseau de cœur en 231. En cas d'échec constaté en 232, il est commandé au nœud courant d'émettre en 233 une requête de découverte vers le ou les nœuds voisins sélectionnés pour déclencher sa réactivation selon le procédé de l'invention qui vient d'être décrit.

Une fois l'accès aux services du réseau de communication sans fil rétabli, le nœud courant se remet en mode actif AMD.

On décrit maintenant, en relation avec la FIG. 5 un exemple de passage dans le mode veille des nœuds d'un réseau de communication sans fil selon un mode de réalisation.

Dans cet exemple et dans ceux qui suivent, on considère le réseau de communication sans fil de la FIG. 1 présentant une structure de réseau maillé et comprenant les équipement nœuds suivants :

Une passerelle réseau NG connectée à Internet et fournissant deux réseaux, l'un utilisateur et l'autre cœur, diffusés sur deux radios. On l'appelle aussi nœud racine, et

Deux nœuds d'extension NEH et NEL de type WLAN (de l'anglais, « Wi-Fi sur réseau LAN »), configurés pour se connecter sur le réseau de cœur, et diffusant les deux réseaux utilisateur UN et cœur CN sur deux radios.

Sur la FIG. 5 et les suivantes (6 à 8), la diffusion des réseaux UN et CN sur les différentes radios est représentée par un halo pointillé et segmenté. La connexion Wi-Fi entre deux équipements de communication sans fil (terminal utilisateur et/ou équipement nœud est représentée par un éclair reliant les deux appareils en question. Une icône en forme de téléphone portable représente un terminal utilisateur UT. Une flèche avec un trait pointillé représente une requête de découverte ou sonde émise par un équipement de communication (terminal utilisateur ou nœud du réseau de communication sans fil WN) en direction d'un nœud du réseau WN. Une flèche pleine horizontale représente la transition entre deux états (mode actif AMD et mode veille SMD). Le trait plein entre le nœud passerelle NG et le réseau Internet RN représente le lien entre le réseau de l'utilisateur fourni par le réseau WN à Internet.

En relation avec la FIG. 5, on considère un état de départ (a) du réseau WN selon lequel un terminal utilisateur est connecté au nœud d'extension bas NEL, qui est lui-même connecté au nœud d'extension haut NEH, ce dernier étant directement connecté au nœud passerelle NG. Grâce à cette succession de connexions, le terminal utilisateur UT peut accéder aux services offerts par le réseau WN, tel que le service de connexion à Internet, ou un service de communication avec d'autres entités associées audit réseau WN.

On considère ensuite que le réseau WN passe de l'état (a) à un état (b) qui est déclenché par une déconnexion du terminal utilisateur du réseau utilisateur UN du nœud d'extension base NEL. Le terminal utilisateur UT n'a donc plus accès au réseau WN.

Le passage de l'état (b) à un état (c) est déclenché par le nœud d'extension bas, qui passe en mode veille SMD, après expiration d'un délai d'inactivité. Selon l'invention, il a donc désactivé une partie de ses radios, pour n'en garder qu'une, éventuellement en mode dégradé. Il s'agit par exemple de la radio hébergeant le point d'accès au réseau utilisateur UN. Le nœud d'extension bas NEL se déconnecte donc du réseau de cœur du nœud d'extension haut NEH.

Le passage de l'état (c) à un état (d) est déclenché par le nœud d'extension haut NEH. Après un certain temps d'inactivité, ce nœud passe à son tour en mode veille SMD, ce qui entraîne sa déconnexion du nœud passerelle NG. Dans l'état (d), les trois nœuds NEL, NEH et NG sont déconnectés les uns des autres. On note toutefois que le nœud passerelle NG reste connecté au réseau distant RN. En effet, cette connexion n'est pas liée à l'état du réseau cœur CN, car le nœud passerelle, qui est dans l'exemple de la FIG. 1, une passerelle domestique ou d'entreprise, est généralement connecté au réseau distant RN (Internet) via un lien xDSL (de l'anglais, « Digital subscriber Line », pour « Ligne Numérique d'abonné ») ou GPON (de l'anglais, « Gigabit capable Passive Optical Network », pour « réseau optique passif de niveau Gigabit »)/fibre.

On voit que dans l'exemple particulier de réseau maillé de la FIG. 5, qui présente une topologie en arbre dont la racine est la passerelle réseau NG, les connexions à des équipements clients débutent sur les nœuds les plus proches de la racine, puis se déroulent sur la profondeur de l'arbre jusqu'aux feuilles. A l'inverse, la logique de désactivation se déclenche d'abord au niveau des nœuds feuilles avant de remonter l'arbre, éventuellement jusqu'à la racine.

En relation avec la figure 6, on présente maintenant un exemple de réactivation des nœuds d'un réseau de communication sans fil selon un mode de réalisation de l'invention. La FIG. 6 prend comme état de départ l'état (d) de la FIG. 5.

Un état (e) est déclenché par la détection d'un événement de communication, qui correspond à une demande de connexion de l'utilisateur au réseau utilisateur du nœud d'extension bas NEL dont le point d'accès est resté actif. Pour ce faire, le terminal utilisateur UT a émis une requête de découverte ou sonde du réseau de l'utilisateur UN comprenant un identifiant SSID de ce réseau. La réception de cette requête de découverte déclenche la mise en œuvre du mécanisme de réactivation du réseau de communication sans fil précédemment décrit au niveau du nœud d'extension bas NEL. Ce dernier réactive localement ses radios et rétablit ses réseau utilisateur et de cœur.

Le passage de l'état (e) vers un état (f) est déclenché par une tentative de reconnexion du nœud d'extension bas NEL à son voisin le nœud d'extension haut NEH. Comme le nœud d'extension haut a désactivé sa radio hébergeant le point d'accès au réseau de cœur CN, le nœud d'extension bas NEH émet une requête de découverte sur le réseau utilisateur afin de déclencher le mécanisme de réactivation selon l'invention au niveau de son voisin. Par ailleurs, du fait que le nœud d'extension bas NEL a réactivé sa radio hébergeant le point d'accès au réseau utilisateur, le terminal utilisateur a pu se connecter à lui.

Le passage vers un état (g) est déclenché par la sortie du mode veille du nœud d'extension haut NEH qui à son tour réactive ses radios et rétablit ses réseaux utilisateur et de cœur. De la sorte, le nœud d'extension bas NEL peut se reconnecter au nœud d'extension haut NEH, qui lui-même se reconnecte au nœud passerelle NG. Tous les liens entre les nœuds du réseau WN étant à présent rétablis, le terminal utilisateur obtient un accès à Internet.

En relation avec la FIG. 7, on présente maintenant un autre exemple de réactivation du réseau de communication sans fil qui constitue une variante de l'exemple précédent.

La figure 4 prend comme état de départ l'état (d) de la figure 5. Dans cet exemple, le terminal utilisateur UT cherche à se connecter directement au nœud d'extension haut NEH. Une raison possible est qu'il se trouve à portée radio de ce nœud plutôt que du nœud d'extension bas NEL.

L'état (e') illustre la tentative de connexion du terminal utilisateur UT au nœud d'extension haut NEH. Elle comprend l'émission par le terminal utilisateur UT d'une requête de découverte indiquant l'identifiant réseau SSID du réseau utilisateur UN. A réception, le nœud d'extension haut NEH déclenche une réactivation locale de ses radios, détermine qu'il a besoin de se reconnecter au réseau de cœur CN.

L'état (f') est déclenché par la sortie du mode veille du nœud d'extension haut NEH. Le nœud passerelle ayant maintenu ses radios actives, le nœud d'extension haut NEH peut directement se reconnecter au nœud passerelle. Par ailleurs, le terminal utilisateur reçoit une réponse du nœud d'extension haut NEH à sa requête de découverte et se connecte à lui. De la sorte la chaîne de connexion entre le terminal utilisateur UT et le nœud passerelle NG est établie, ce qui donne au terminal utilisateur UT l'accès à Internet.

On constate que dans cet exemple, le nœud d'extension bas NEL ne sort pas du mode veille, puisque ce n'est pas nécessaire pour fournir le service de communication au terminal utilisateur UT. Un avantage est d'optimiser la consommation d'énergie du réseau de communication sans fil WN.

En relation avec la FIG. 8, on présente maintenant encore un autre exemple de mise en œuvre de l'invention. On considère comme état de départ (a) l'état (b) de la FIG. 7. Pour rappel, tous les nœuds sont repassés en mode actif AMD sauf le nœud d'extension bas NEL qui est resté en mode veille SMD. Ce mode de réalisation permet notamment de remettre en route le nœud d'extension bas NEL.

Dans cet exemple, on suppose que le nœud passerelle joue aussi un rôle de de contrôleur d'une configuration du réseau. Par exemple le nœud passerelle NG a lui-même reçu une requête de mise à jour ou de configuration, par exemple du réseau distant RN. Pour la faire appliquer, le nœud passerelle NG tente de se reconnecter à son ou ses nœuds voisins. Lorsqu'il y parvient, il leur transmet la requête de configuration. S'il n'y parvient pas, il met en œuvre le mécanisme de réactivation du réseau selon un ou plusieurs des modes de réalisation qui viennent d'être décrits, en leur envoyant une requête de découverte sur leur radio restée active. En relation avec la FIG. 8, dans l'état (a), tous les nœuds du réseau sont donc en mode actif AMD sauf le nœud d'extension bas NEL. Le nœud passerelle NG émet une requête de mise à jour/configuration vers son voisin le nœud d'extension haut NEH. L'application de la configuration au nœud d'extension haut NEH peut se faire directement, car il est déjà connecté au nœud passerelle NG. En outre, cette requête de mise à jour/configuration reçue par le nœud d'extension haut NEH est traitée comme un événement de communication qui déclenche le mécanisme de réactivation selon l'invention. En l'espèce, la réactivation locale des radios du nœud d'extension haut NEH n'est pas requise puisqu'il est déjà en mode actif. En effet, le nœud d'extension haut NEH étant déjà en mode actif AMD, ses radios sont déjà actives. En revanche, la réception d'une requête de mise à jour/reconfiguration est interprétée par le procédé selon l'invention comme une condition de reconnexion du nœud d'extension haut à tous ses nœuds voisins. Le nœud d'extension haut NEH tente donc de se reconnecter au nœud d'extension bas NEL. Du fait que la radio hébergeant le point d'accès du nœud d'extension bas NEL au réseau cœur CN du nœud d'extension bas NEL est désactivée, le nœud d'extension haut NEH émet une requête de découverte du réseau de cœur afin de déclencher la mise en œuvre par le nœud voisin NEL du mécanisme de réactivation précédemment décrit.

Dans l'état (b), le nœud d'extension bas NEL reçoit donc la requête de découverte en provenance du nœud d'extension haut NEH sur son réseau utilisateur UN, ce qui déclenche la réactivation locale de ses radios. En l'espèce, comme il se situe en bout de branche, une réactivation locale de ses propres radios suffit. Il n'a en effet aucun autre voisin que le nœud d'extension haut NEH auquel se reconnecter et donc vers lequel propager un déclencheur de réactivation des radios.

Dans l'état (c), le nœud d'extension bas NEL se reconnecte au réseau de cœur CN. Le nœud d'extension haut NEH peut alors lui transmettre la requête de mise à jour/reconfiguration pour qu'il l'exécute.

Ainsi, le mécanisme de réactivation selon un ou plusieurs des modes de réalisation qui viennent d'être décrits permet au nœud passerelle de faire appliquer une nouvelle configuration au réseau à tous les nœuds du réseau de communication sans fil, même ceux qui sont en mode veille SMD.

En option, le nœud d'extension NEL bas peut se remettre en mode veille une fois sa configuration mise à jour, revenant ainsi à l'état (a) de départ de la figure 8.

Les fonctions, étapes et procédés décrits dans ce document peuvent être mises en œuvre par logiciel (par exemple, via un logiciel sur un ou plusieurs processeurs, pour exécution sur un ordinateur à usage général ou à usage spécifique) et/ou être mises en œuvre par du hardware (par exemple un ou plusieurs circuits électroniques, et/ou tout autre composant matériel).

La présente description concerne ainsi un logiciel ou programme d'ordinateur, susceptible d'être exécuté par un dispositif hôte (par exemple, le dispositif 100) au moyen d'un ou plusieurs processeurs de données, ce logiciel / programme comportant des instructions pour causer l'exécution par ce dispositif hôte de tout ou partie des étapes de l'un ou des procédés décrits dans ce document. Ces instructions sont destinées à être stockées dans une mémoire du dispositif hôte, chargées puis exécutées par un ou plusieurs processeurs de ce dispositif hôte de sorte à causer l'exécution par ce dispositif hôte du procédé.

Ce logiciel / programme peut être codé au moyen de n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif hôte peut être mis en œuvre par une ou plusieurs machines physiquement distinctes. Le dispositif hôte peut présenter globalement l'architecture d'un ordinateur, incluant des constituants d'une telle architecture : mémoire(s) de données, processeur(s), bus de communication, interface(s) matérielle(s) pour la connexion de ce dispositif hôte à un réseau ou un autre équipement, interface(s) utilisateur, etc.

Dans un mode de réalisation, tout ou partie des étapes du procédé de programmation ou d'un autre procédé décrit dans ce document sont mises en œuvre par un dispositif de programmation doté de moyens de mise en œuvre de ces étapes de ce procédé.

Ces moyens peuvent comprendre des moyens logiciels (software) (par exemple, des instructions d'un ou plusieurs composants d'un programme) et/ou moyens matériels (hardware) (par exemple, mémoire(s) de données, processeur(s), bus de communication, interface(s) matérielle(s), etc).

Ces moyens peuvent comprendre par exemple un ou plusieurs circuits configurés pour exécuter une ou plusieurs ou toutes les étapes d'un des procédés décrits ici. Ces moyens peuvent comprendre par exemple au moins un processeur et au moins une mémoire comprenant des instructions de programme configurées pour, lorsqu'elles sont exécutées par le processeur, causer l'exécution par le dispositif d'une ou plusieurs ou toutes les étapes d'un des procédés décrits ici.

La figure 9 illustre un exemple de structure matérielle d'un dispositif 100 de gestion d'une gestion d'un état d'activation d'un équipement nœud d'un réseau de communication sans fil selon l'invention. Dans cet exemple, le dispositif 100 est configuré pour mettre en œuvre toutes les étapes du procédé de gestion d'un état d'activation d'un équipement nœud décrit dans le présent document. En variante, il pourrait aussi mettre en œuvre une partie seulement de ces étapes.

En relation avec la FIG. 9, le dispositif 100 comprend au moins un processeur 110 et au moins une mémoire 120. Le dispositif 100 peut aussi comprendre une ou plusieurs interfaces de communication. Dans cet exemple, le dispositif 100 comprend des interfaces réseau 130 (par exemple, des interfaces réseau pour l'accès à un réseau câblé / sans fil, y compris une interface Ethernet, une interface WIFI, etc.) connectées au processeur 110 et configurées pour communiquer via un ou plusieurs liens de communication câblés / non câblés et des interfaces utilisateur 140 (par exemple, un clavier, une souris, un écran d'affichage, etc) connectées au processeur. Le dispositif 100 peut également comprendre un ou plusieurs lecteurs de support 150 pour lire un support de stockage lisible par ordinateur (par exemple, un disque de stockage numérique (CD-ROM, DVD, Blue Ray, etc.), une clé USB, etc). Le processeur 110 est connecté à chacun des autres composants précités afin d'en commander le fonctionnement.

La mémoire 120 peut comprendre une mémoire vive (RAM), une mémoire cache, une mémoire non volatile, une mémoire de sauvegarde (par exemple, des mémoires programmables ou flash), une mémoire morte (ROM), un disque dur (HDD), un lecteur à état solide (SSD) ou toute combinaison de ceux-ci. La ROM de la mémoire 120 peut être configurée pour stocker, entre autres, un système d'exploitation du dispositif 100 et/ou un ou plusieurs codes de programmes informatiques d'une ou plusieurs applications logicielles. La RAM de la mémoire 120 peut être utilisée par le processeur 110 pour le stockage temporaire de données.

Le processeur 110 peut être configuré pour stocker, lire, charger, exécuter et/ou traiter autrement des instructions stockées dans un support de stockage lisible par ordinateur et/ou dans la mémoire 120 de sorte que, lorsque les instructions sont exécutées par le processeur, le dispositif 100 exécute une ou plusieurs ou toutes les étapes du procédé de construction, respectivement de diagnostic, décrit dans le présent document. Des moyens mettant en œuvre une fonction ou un ensemble de fonctions peuvent correspondre dans ce document à un composant logiciel, à un composant matériel ou bien à une combinaison de composants matériels et/ou logiciels, apte à mettre en œuvre la fonction ou l'ensemble de fonctions, selon ce qui est décrit ci-dessous pour les moyens concernés.

La présente description concerne aussi un support d'informations lisible par un processeur de données, et comportant des instructions d'un programme tel que mentionné ci-dessus.

Le support d'informations peut être n'importe quel moyen matériel, entité ou appareil, capable de stocker les instructions d'un programme tel que mentionné ci-dessus. Les supports de stockage de programme utilisables incluent les mémoires ROM ou RAM, les supports de stockage magnétiques tels que des disques magnétiques et des bandes magnétiques, les disques durs ou des supports de stockage de données numériques à lecture optique, ou toute combinaison de ces supports.

Dans certains cas, le support de stockage lisible par ordinateur n'est pas transitoire. Dans d'autres cas, le support d'informations peut être un support transitoire (par exemple, une onde porteuse) pour la transmission d'un signal (signal électromagnétique, électrique, radio ou optique) porteur des instructions de programme. Ce signal peut être acheminé via un moyen de transmission approprié, filaire ou non filaire : câble électrique ou optique, liaison radio ou infrarouge, ou par d'autres moyens.

Un mode de réalisation concerne également un produit programme d'ordinateur comprenant un support de stockage lisible par ordinateur sur lequel sont stockées des instructions de programme, les instructions de programme étant configurées pour causer la mise en œuvre par le dispositif hôte (par exemple un ordinateur) de tout ou partie des étapes d'un ou des procédés décrits ici lorsque les instructions de programme sont exécutées par un ou plusieurs processeurs et/ou un ou plusieurs composants matériels programmables du dispositif hôte.

Les modes de réalisations qui viennent d'être présentés ne sont pas limités à l'exemple particulier de réseau maillé qui vient d'être présenté et ils s'appliquent dans d'autres cas d'usage, tels que, par exemple :
- un réseau de communication sans fil structuré selon un autre type de maille ou un réseau de communication sans fil structuré en étoile, selon lequel plusieurs nœuds d'extension WLAN sont connectés à un même nœud (par exemple le nœud passerelle ou autre nœud d'extension). Les mécanismes qui viennent d'être décrits s'appliquent de la même façon. Un nœud doit cependant attendre que tous les nœuds ou appareils qui lui sont connectés ne soient plus connectés pour pouvoir passer en veille,
- un réseau hétérogène, dans lequel certains nœuds implémentent le procédé de l'invention et d'autres non. Dans ce cas, un nœud d'extension qui n'implémente pas la solution de l'invention, continue à passer en veille et à se réactiver en suivant sa propre logique, tandis qu'un nœud qui implémente l'invention ne passera pas en mode veille tant qu'un de ses voisins reste connecté à lui. Dans les deux cas, la cohérence du réseau est préservée.

Les modes de réalisations qui viennent d'être présentés, ainsi que leurs variantes, présentent chacun de nombreux avantages. Ils permettent de contrôler la manière dont les radios des équipements nœuds sont éteintes, ainsi que de définir la manière dont elles seront rallumées afin que l'accès aux services puisse être rendu quand les utilisateurs du réseau souhaitent se reconnecter et qu'une mise à jour puisse être appliquée à tous les nœuds lorsque c'est nécessaire. Les solutions offertes par des modes de réalisation fonctionnent avec les messages standards de IEEE 802.11 et permettent une gestion de mise en veille/sortie de veille décidée par chaque nœud du réseau de communication sans fil, sans nécessiter une gestion centralisée par un contrôleur, par exemple un nœud maître, qui commanderait à des agents d'éteindre ou de réactiver certaines de leurs radios selon une logique centralisée.

Ces solutions assurent enfin une cohérence du réseau entre un nœud courant implémentant la solution et d'autres nœuds ne l'implémentant pas. En effet, on peut considérer :
- soit un autre nœud du réseau qui n'implémente aucune méthode de mise en veille. Dans ce cas, le nœud courant n'a pas besoin d'implémenter le mécanisme de réactivation qui vient d'être décrit, puisque l'autre nœud ne passe jamais en mode veille,
- soit un autre nœud qui implémenterait une méthode différente de mise en veille et/ou de remise en route que le procédé qui vient d'être décrit. Dans ce cas, cet autre nœud, s'il n'a pas désactivé toutes ses radios, recevra la requête de découverte émise par le nœud courant, mais ne déclenchera pas le mécanisme de réactivation du réseau cœur de proche en proche qui vient d'être décrit, mais la cohérence du réseau et le mode de fonctionnement propre à chaque nœud seront préservés.

## Revendications

1. Procédé de gestion d'un état d'activation d'un équipement nœud, dit nœud courant, d'un réseau de communication sans fil (WN), ledit réseau de communication sans fil (WN) étant configuré pour fournir un service de communication à un équipement client, ledit réseau de communication sans fil (WN) comprenant au moins un autre équipement nœud, dit nœud voisin, ledit nœud courant comprenant une première radio hébergeant un premier point d'accès à un premier réseau de communication sans fil, dit cœur (CN), du nœud courant, configuré pour interconnecter le nœud courant et ledit au moins un nœud voisin, et une deuxième radio hébergeant un deuxième point d'accès à un deuxième réseau de communication sans fil, dit réseau utilisateur (UN), du nœud courant, configuré pour connecter l'équipement client audit nœud courant et, par l'intermédiaire du réseau cœur (CN) lui donner accès audit service de communication, **caractérisé en ce que**, ledit nœud courant étant configuré pour, à l'expiration d'une période d'inactivité pendant laquelle aucun équipement client ne s'est connecté audit réseau utilisateur (UN), passer dans un état partiellement désactivé, comprenant une désactivation partielle (24) desdites radios, selon laquelle une desdites radios parmi la première et la deuxième radios reste active, ledit procédé comprend :
- sur réception (20) d'une requête de communication par le nœud courant sur une dite radio parmi la première et la deuxième radios, la réactivation (21) de l'autre radio du nœud courant, lorsque ledit nœud courant est dans l'état partiellement désactivé, et
- lorsqu'il a été déterminé (22), au moins en fonction de la requête de communication reçue, qu'une reconnexion du nœud courant audit au moins un nœud voisin est requise pour traiter ladite requête de communication, et suite à un échec de reconnexion du nœud courant audit au moins un nœud voisin, le déclenchement d'une réactivation du au moins un nœud voisin par l'envoi (23) par le nœud courant d'une requête de découverte sur au moins une radio dudit au moins nœud voisin.

2. Procédé de gestion d'un état d'activation d'un équipement nœud selon la revendication 1, **caractérisé en ce qu'**il comprend la détermination (22) qu'une reconnexion du nœud courant audit au moins un nœud voisin est requise, au moins en fonction d'un type de la requête de communication, et d'une topologie du réseau de communication sans fil.

3. Procédé de gestion d'un état d'activation d'un équipement nœud selon l'une quelconque des revendications 1 et 2, **caractérisé en ce que**, lorsqu'il a été déterminé qu'une connexion dudit nœud courant au réseau de communication sans fil (WN) est requise, le procédé comprend la sélection (230) d'au moins undit nœud voisin et la requête de découverte est envoyée audit au moins un nœud voisin sélectionné.

4. Procédé de gestion d'un état d'activation d'un équipement nœud selon la revendication 3, **caractérisé en ce que**, lorsque la requête de communication comprend une requête de découverte d'undit réseau du nœud courant, ledit au moins un nœud voisin sélectionné est situé sur ledit chemin de connexion du nœud courant à un autre desdits équipements nœud du réseau de communication sans fil (WN), dit nœud passerelle, configuré pour fournir le service de communication.

5. Procédé de gestion d'un état d'activation d'un équipement nœud selon les revendications 2 et 3, **caractérisé en ce que** lorsque la requête de communication comprend une requête de configuration du réseau de communication sans fil, il est déterminé (22) qu'une reconnexion du nœud courant au réseau cœur est requise pour traiter ladite requête de communication, tous les nœuds voisins du nœud courant auxquels il n'est pas déjà connecté sont sélectionnés et la réactivation desdits nœuds voisins est déclenchée par l'envoi d'une requête de découverte.

6. Procédé de gestion d'un état d'activation d'un équipement nœud selon l'une quelconque des revendications précédentes, **caractérisé en ce que** la reconnexion comprend, suite à un échec de connexion audit au moins un nœud voisin sélectionné, la vérification d'un état d'activation de radios dudit au moins un nœud voisin sélectionné, et **en ce que**, lorsqu'il a été constaté que la première radio du nœud voisin hébergeant le premier point d'accès au réseau cœur est désactivée, la requête de découverte envoyée comprend un identifiant du réseau utilisateur du nœud voisin.

7. Procédé de gestion d'un état d'activation d'au moins une radio d'un équipement nœud selon la revendication précédente, **caractérisé en ce que** la radio qui reste activée est la deuxième radio et le nœud courant est déconnecté dudit au moins un nœud voisin.

8. Dispositif (100) de gestion d'un état d'activation d'un équipement nœud, dit nœud courant, d'un réseau de communication sans fil (WN), configuré pour fournir un service de communication à un équipement client, ledit réseau de communication sans fil(WN) comprenant au moins un autre équipement nœud, dit nœud voisin, ledit nœud courant comprenant une première radio hébergeant un premier point d'accès à un premier réseau de communication sans fil, dit réseau cœur (CN), du nœud courant, configuré pour interconnecter ledit nœud courant et ledit au moins un nœud voisin, et une deuxième radio hébergeant un deuxième point d'accès à un deuxième réseau de communication sans fil, dit réseau utilisateur (UN) du nœud courant, configuré pour connecter l'équipement client audit réseau utilisateur (UN) et, par l'intermédiaire du réseau cœur, lui donner accès au service de communication, **caractérisé en ce que**, ledit nœud courant étant configuré pour, à l'expiration d'une période d'inactivité pendant laquelle aucun équipement client ne s'est connecté audit réseau utilisateur (UN), passer dans un état partiellement désactivé, comprenant une désactivation partielle (24) desdites radios, selon laquelle une desdites radios parmi la première et la deuxième radios reste active, ledit dispositif est configuré pour mettre en œuvre :
- sur réception d'une requête de communication par le nœud courant sur une dite radio parmi la première et la deuxième radios, la réactivation de l'autre radio, lorsque ledit nœud courant est dans l'état partiellement désactivé, et
- lorsque l'état désactivé du nœud courant comprend une désactivation de la première radio et lorsqu'il a été déterminé, au moins en fonction de la requête de communication reçue, qu'une connexion du nœud courant au réseau cœur est requise pour traiter ladite requête de communication, et suite à un échec de connexion du nœud courant audit au moins un nœud voisin, le déclenchement d'une réactivation du au moins un nœud voisin par l'envoi par le nœud courant d'une requête de découverte sur la radio restée active dudit au moins nœud voisin.

9. Equipement nœud (NG, NEL, NEH), dit nœud courant, d'un premier réseau de communication sans fil (WN), comprenant au moins un autre équipement nœud, dit nœud voisin, ledit nœud courant comprenant une première radio hébergeant au moins un premier point d'accès à un premier réseau de communication sans fil dudit nœud courant, dit réseau cœur (CN), et une deuxième radio hébergeant au moins un deuxième point d'accès à un deuxième réseau de communication sans fil du nœud courant, dit réseau utilisateur (UN), configuré pour connecter le équipement client au nœud courant et, par l'intermédiaire du réseau cœur, lui donner accès au service de communication, **caractérisé en ce que** ledit nœud courant comprend un dispositif (100) de gestion d'un état d'activation de l'équipement nœud selon la revendication 8.

10. Système de communication (S) comprenant au moins deux équipements nœuds selon la revendication 9, d'un premier réseau de communication sans fil, dit réseau cœur (CN), configuré pour fournir un service de communication à un équipement client, ledit système comprenant un équipement client (UT) apte à se connecter à un deuxième réseau de communication sans fil (UN), dit réseau utilisateur, d'au moins un desdits équipements nœuds pour accéder audit service de communication.

11. Programme d'ordinateur comprenant des instructions pour l'exécution d'un procédé selon l'une quelconque des revendications 1 à 7, lorsque ledit programme est exécuté par un ordinateur.

## Patentansprüche

1. Verfahren zum Verwalten eines Aktivierungszustands einer als aktueller Knoten bezeichneten Knotenvorrichtung eines drahtlosen Kommunikationsnetzwerks (WN), wobei das drahtlose Kommunikationsnetzwerk (WN) dazu konfiguriert ist, einer Client-Vorrichtung einen Kommunikationsdienst bereitzustellen, wobei das drahtlose Kommunikationsnetzwerk (WN) mindestens eine als Nachbarknoten bezeichnete weitere Knotenvorrichtung umfasst, wobei der aktuelle Knoten eine erste Funkeinrichtung umfasst, in der sich ein erster Zugangspunkt zu einem als Kernnetzwerk (CN) bezeichneten ersten drahtlosen Kommunikationsnetzwerk des aktuellen Knotens befindet, das dazu konfiguriert ist, den aktuellen Knoten und den mindestens einen Nachbarknoten miteinander zu verbinden, und eine zweite Funkeinrichtung umfasst, in der sich ein zweiter Zugangspunkt zu einem als Benutzernetzwerk (UN) bezeichneten zweiten drahtlosen Kommunikationsnetzwerk des aktuellen Knotens befindet, das dazu konfiguriert ist, die Client-Vorrichtung mit dem aktuellen Knoten zu verbinden und ihr über das Kernnetzwerk (CN) Zugang zu dem Kommunikationsdienst zu gewähren, **dadurch gekennzeichnet, dass** der aktuelle Knoten dazu konfiguriert ist, nach Ablauf einer Periode der Inaktivität, während der sich keine Client-Vorrichtung mit dem Benutzernetzwerk (UN) verbunden hat, in einen teilweise deaktivierten Zustand zu wechseln, der eine partielle Deaktivierung (24) der Funkeinrichtungen umfasst, bei der eine der Funkeinrichtungen von der ersten und der zweiten Funkeinrichtung aktiv bleibt, wobei das Verfahren umfasst:
- nach dem Empfangen (20) einer Kommunikationsanforderung durch den aktuellen Knoten auf einer der Funkeinrichtungen von der ersten und der zweiten Funkeinrichtung, Reaktivieren (21) der anderen Funkeinrichtung des aktuellen Knotens, wenn sich der aktuelle Knoten im teilweise deaktivierten Zustand befindet, und
- wenn zumindest in Abhängigkeit von der empfangenen Kommunikationsanforderung bestimmt wurde (22), dass zur Verarbeitung der Kommunikationsanforderung eine erneute Verbindung des aktuellen Knotens mit dem mindestens einen Nachbarknoten erforderlich ist, und wenn die erneute Verbindung des aktuellen Knotens mit dem mindestens einen Nachbarknoten fehlgeschlagen ist, Auslösen eines Reaktivierens des mindestens einen Nachbarknotens durch Senden (23) einer Erkennungsanforderung durch den aktuellen Knoten an mindestens eine Funkeinrichtung des mindestens einen Nachbarknotens.

2. Verfahren zum Verwalten eines Aktivierungszustands einer Knotenvorrichtung nach Anspruch 1, **dadurch gekennzeichnet, dass** es das Bestimmen (22) umfasst, dass eine erneute Verbindung des aktuellen Knotens mit dem mindestens einen Nachbarknoten zumindest in Abhängigkeit von einem Typ der Kommunikationsanforderung und einer Topologie des drahtlosen Kommunikationsnetzwerks erforderlich ist.

3. Verfahren zum Verwalten eines Aktivierungszustands einer Knotenvorrichtung nach einem der Ansprüche 1 und 2,
**dadurch gekennzeichnet, dass,** wenn bestimmt wurde, dass eine Verbindung des aktuellen Knotens mit dem drahtlosen Kommunikationsnetzwerk (WN) erforderlich ist, das Verfahren das Auswählen (230) von mindestens einem der Nachbarknoten umfasst und die Erkennungsanforderung an den mindestens einen ausgewählten Nachbarknoten gesandt wird.

4. Verfahren zum Verwalten eines Aktivierungszustands einer Knotenvorrichtung nach Anspruch 3, **dadurch gekennzeichnet, dass,** wenn die Kommunikationsanforderung eine Anforderung zum Erkennen eines Netzwerks des aktuellen Knotens umfasst, sich der mindestens eine ausgewählte Nachbarknoten auf dem Verbindungspfad des aktuellen Knotens zu einer als Gateway-Knoten bezeichneten anderen der Knotenvorrichtungen des drahtlosen Kommunikationsnetzwerks (WN), das zum Bereitstellen des Kommunikationsdienstes konfiguriert ist, befindet.

5. Verfahren zum Verwalten eines Aktivierungszustands einer Knotenvorrichtung nach den Ansprüchen 2 und 3,
**dadurch gekennzeichnet, dass,** wenn die Kommunikationsanforderung eine Anforderung zur Konfigurieren des drahtlosen Kommunikationsnetzwerks umfasst, bestimmt (22) wird, dass zur Verarbeitung der Kommunikationsanforderung eine erneute Verbindung des aktuellen Knotens mit dem Kernnetzwerk erforderlich ist, alle Nachbarknoten des aktuellen Knotens, mit denen dieser noch nicht verbunden ist, ausgewählt werden und das Reaktivieren der Nachbarknoten durch Senden einer Erkennungsanforderung ausgelöst wird.

6. Verfahren zum Verwalten eines Aktivierungszustands einer Knotenvorrichtung nach einem der vorhergehenden Ansprüche,
**dadurch gekennzeichnet, dass** die erneute Verbindung nach einem Fehlschlagen der Verbindung mit dem mindestens einen ausgewählten Nachbarknoten das Überprüfen eines Aktivierungszustands der Funkeinrichtungen des mindestens einen ausgewählten Nachbarknotens umfasst, und **dadurch, dass,** wenn festgestellt wurde, dass die erste Funkeinrichtung des Nachbarknotens, in der sich der erste Zugangspunkt zum Kernnetzwerk befindet, deaktiviert ist, die gesendete Erkennungsanforderung eine Kennung des Benutzernetzwerks des Nachbarknotens umfasst.

7. Verfahren zum Verwalten eines Aktivierungszustands mindestens einer Funkeinrichtung einer Knotenvorrichtung nach dem vorhergehenden Anspruch,
**dadurch gekennzeichnet, dass** die Funkeinrichtung, die aktiviert bleibt, die zweite Funkeinrichtung ist und der aktuelle Knoten von dem mindestens einen Nachbarknoten getrennt wird.

8. Vorrichtung (100) zum Verwalten eines Aktivierungszustands einer als aktueller Knoten bezeichneten Knotenvorrichtung eines drahtlosen Kommunikationsnetzwerks (WN), das dazu konfiguriert ist, einer Client-Vorrichtung einen Kommunikationsdienst bereitzustellen, wobei das drahtlose Kommunikationsnetzwerk (WN) mindestens eine als Nachbarknoten bezeichnete weitere Knotenvorrichtung umfasst, wobei der aktuelle Knoten eine erste Funkeinrichtung umfasst, in der sich ein erster Zugangspunkt zu einem als Kernnetzwerk (CN) bezeichneten ersten drahtlosen Kommunikationsnetzwerk des aktuellen Knotens befindet, das dazu konfiguriert ist, den aktuellen Knoten und den mindestens einen Nachbarknoten miteinander zu verbinden, und eine zweite Funkeinrichtung umfasst, in der sich ein zweiter Zugangspunkt zu einem als Benutzernetzwerk (UN) bezeichneten zweiten drahtlosen Kommunikationsnetzwerk des aktuellen Knotens befindet, das dazu konfiguriert ist, die Client-Vorrichtung mit dem Benutzernetzwerk (UN) zu verbinden und ihr über das Kernnetzwerk Zugang zum Kommunikationsdienst zu gewähren,
**dadurch gekennzeichnet, dass** der aktuelle Knoten dazu konfiguriert ist, nach Ablauf einer Periode der Inaktivität, während der sich keine Client-Ausrüstung mit dem Benutzernetzwerk (UN) verbunden hat, in einen teilweise deaktivierten Zustand zu wechseln, der ein partielles Deaktivieren (24) der Funkeinrichtungen umfasst, bei der eine der Funkeinrichtungen von der ersten und der zweiten Funkeinrichtung aktiv bleibt, wobei die Vorrichtung dazu konfiguriert ist, Folgendes zu implementieren:
- nach dem Empfangen einer Kommunikationsanforderung durch den aktuellen Knoten auf einer der Funkeinrichtungen von der ersten und der zweiten Funkeinrichtung, Reaktivieren der anderen Funkeinrichtung, wenn sich der aktuelle Knoten im teilweise deaktivierten Zustand befindet, und
- wenn der deaktivierte Zustand des aktuellen Knotens eine Deaktivierung der ersten Funkeinrichtung umfasst und wenn zumindest in Abhängigkeit von der empfangenen Kommunikationsanforderung bestimmt wurde, dass zur Verarbeitung der Kommunikationsanforderung eine Verbindung des aktuellen Knotens mit dem Kernnetzwerk erforderlich ist und nach einem Fehlschlagen der Verbindung des aktuellen Knotens mit dem mindestens einen Nachbarknoten, Auslösen eines Reaktivieren des mindestens einen Nachbarknotens durch Senden einer Erkennungsanforderung durch den aktuellen Knoten an die aktiv gebliebene Funkeinrichtung des mindestens einen Nachbarknotens.

9. Knotenvorrichtung (NG, NEL, NEH), die als aktueller Knoten bezeichnet wird, eines ersten drahtlosen Kommunikationsnetzwerks (WN), das mindestens eine weitere als Nachbarknoten bezeichnete Knotenvorrichtung umfasst, wobei der aktuelle Knoten eine erste Funkeinrichtung umfasst, in der sich mindestens ein erster Zugangspunkt zu einem als Kernnetzwerk (CN) bezeichneten ersten drahtlosen Kommunikationsnetzwerk des aktuellen Knotens befindet, und eine zweite Funkeinrichtung umfasst, in der sich mindestens ein zweiter Zugangspunkt zu einem als Benutzernetzwerk (UN) bezeichneten zweiten drahtlosen Kommunikationsnetzwerk des aktuellen Knotens befindet, das dazu konfiguriert ist, die Client-Vorrichtung mit dem aktuellen Knoten zu verbinden und ihr über das Kernnetzwerk Zugang zum Kommunikationsdienst zu gewähren, **dadurch gekennzeichnet, dass** der aktuelle Knoten eine Vorrichtung (100) zum Verwalten eines Aktivierungszustands der Knotenausrüstung nach Anspruch 8 umfasst.

10. Kommunikationssystem (S), umfassend mindestens zwei Knotenvorrichtungen nach Anspruch 9, eines als Kernnetzwerk (CN) bezeichneten ersten drahtlosen Kommunikationsnetzwerks, das dazu konfiguriert ist, einer Client-Vorrichtung einen Kommunikationsdienst bereitzustellen, wobei das System eine Client-Vorrichtung (UT) umfasst, die dazu eingerichtet ist, sich mit einem als Benutzernetzwerk bezeichneten zweiten drahtlosen Kommunikationsnetzwerk (UN) mindestens einer der Knotenvorrichtungen zu verbinden, um auf den Kommunikationsdienst zuzugreifen.

11. Computerprogramm, das Anweisungen zum Ausführen eines Verfahrens nach einem der Ansprüche 1 bis 7, wenn das Programm von einem Computer ausgeführt wird, umfasst.

## Claims

1. A method for managing an activation state of a node device, called current node, of a wireless communication network (WN), said wireless communication network (WN) being configured to provide a communication service to a client device, said wireless communication network (WN) comprising at least one other node device, called neighbor node, said current node comprising a first radio hosting a first access point to a first wireless communication network, called core (CN) of the current node, configured to interconnect the current node and said at least one neighbor node, and a second radio hosting a second access point to a second wireless communication network, called user network (UN), of the current node, configured to connect the client device to said current node and, via the core network (CN), give it access to said communication service **characterized in that**, said current node being configured, upon expiry of a period of inactivity during which no client device has connected to said user network (UN), to enter a partially deactivated state, comprising a partial deactivation (24) of said radios, whereby one of said first and second radios remains active, said method comprises:
- upon receipt (20) of a communication request by the current node on one of said first and second radios, reactivation (21) of the other radio of the current node, when said current node is in the partially deactivated state, and
- when it has been determined (22), at least as a function of the received communication request, that reconnection of the current node to said at least one neighbor node is required to process said communication request, and following failure of reconnection of the current node to said at least one neighbor node, triggering reactivation of the at least one neighbor node by the current node sending (23) a discovery request on at least one radio of said at least one neighbor node.

2. The method of managing an activation state of a node device according to claim 1, **characterized in that** it comprises determining (22) that a reconnection of the current node to said at least one neighbor node is required, at least as a function of a type of the communication request, and of a topology of the wireless communication network.

3. The method of managing an activation state of a node device according to any one of claims 1 and 2, **characterized in that**, when it has been determined that a connection of said current node to the wireless communication network (WN) is required, the method comprises selecting (230) at least one said neighbor node and the discovery request is sent to said at least one selected neighbor node.

4. The method of managing an activation state of a node device according to claim 3, **characterized in that**, when the communication request comprises a request for discovery of said network of the current node, said at least one selected neighbor node is located on said connection path from the current node to another of said node devices of the wireless communication network (WN), called gateway node, configured to provide the communication service.

5. The method of managing an activation state of a node device according to claims 2 and 3, **characterized in that** when the communication request comprises a request for configuration of the communication network, it is determined that a reconnection of the current node to the core network is required to process said communication request, all nodes neighboring the current node to which it is not already connected are selected, and reactivation of said neighboring nodes is triggered by sending a discover request.

6. The method of managing an activation state of a node device according to any one of the preceding claims, **characterized in that** reconnection comprises, following a connection failure to said at least one selected neighbor node, verification of an activation state of radios of said at least one selected neighbor node, and **in that**, when it has been ascertained that the first radio of the neighbor node hosting the first access point to the core network is deactivated, the discovery request sent comprises an identifier of the user network of the neighbor node.

7. The method of managing an activation state of at least one radio of a node device according to the preceding claim, **characterized in that** the radio which remains activated is the second radio and the current node is disconnected from said at least one neighbor node.

8. An apparatus (100) for managing an activation state of a node device, called current node, of a wireless communication network (WN), configured to provide a communication service to a client device, said wireless communication network (WN) comprising at least one other node device, called neighbor node, said current node comprising a first radio hosting a first access point to a first wireless communication network, called core network (CN) of the current node, configured to interconnect said current node and said at least one neighbor node, and a second radio hosting a second access point to a second wireless communication network, called user network (UN) of the current node, configured to connect the client device to said user network (UN) and, via the core network, give it access to the communication service, **characterized in that**, said current node being configured, upon expiry of a period of inactivity during which no client device has connected to said user network (UN), to enter into a partially deactivated state, comprising a partial deactivation (24) of said radios, according to which one of said radios among the first and second radios remains active, said apparatus is configured to implement:
- upon receipt of a communication request by the current node on one of said first and second radios, reactivation of the other radio, when said current node is in the partially deactivated state, and
- when the deactivated state of the current node comprises a deactivation of the first radio and when it has been determined, at least as a function of the received communication request, that a connection of the current node to the core network is required to process said communication request, and following a connection failure of the current node to said at least one neighbor node, triggering a reactivation of the at least one neighbor node by the current node sending a discovery request on the radio remaining active of said at least one neighbor node.

9. A node device (NG, NEL, NEH), called current node, of a first wireless communication network (WN), comprising at least one other node device, called neighbor node, said current node comprising a first radio hosting at least a first access point to a first wireless communication network of said current node, called core network (CN), and a second radio hosting at least one second access point to a second wireless communication network of the current node, called user network (UN), configured to connect the client device to the current node and, via the core network, give it access to the communication service, **characterized in that** said current node comprises an apparatus (100) for managing an activation state of the node device according to claim 9.

10. A communication system (S) comprising at least two node devices according to claim 9, of a first wireless communication network, called core network (CN), configured to provide a communication service to a client device, said system comprising a client device (UT) able to connect to a second wireless communication network (UN), called user network, of at least one of said node devices to access said communication service.

11. A computer program comprising instructions for executing a method according to any one of claims 1 to 7 when said program is executed by a computer.
